# EUROPEAN PATENT APPLICATION

(11) **EP 1 619 614 A1**
(43) Date of publication of application: **25.01.2006**
(21) Application number: 04723057.8
(22) Date of filing: 24.03.2004
(51) Int. Cl.: G06Q 10/00

(54) **DATA COMMUNICATION CONTROL SYSTEM, COMMUNICATION SYSTEM, SERVICE PROVIDING METHOD, AND COMPUTER PROGRAM**

(30) Priority: 28.03.2003 JP 2003092832
(71) Applicant: Konami Corporation, Chiyoda-ku, Tokyo 100-6330 (JP)
(72) Inventor: Takahashi, H., c/o Konami Corporation, Tokyo 100-6330 (JP)
(74) Representative: de Beaumont, Michel
(86) International application number: PCT/JP2004/004136
(87) International publication number: WO 2004/088556

(57) **Abstract**

A data communication control system, a communication system, a service providing method, and a computer program, issuing a code train to be used as a keyword through a variety of media such as the Internet, various stores, magazines, and television broadcasting and radio broadcasting while providing, from a game server using a web server computer, a user terminal with services such as a game to be implemented by changing points used as bet points, for example, wherein a user who has obtained the issued code train transmits the code train from the user terminal to the game server that gives points necessary for providing services to the user, based on the received code train.

## Description

### BACKGROUND OF THE INVENTION

### 1. Field of the Invention

The invention relates to a data communication control system having a program, etc. recording server that records a program or data, and capable of having a user terminal to execute the program or the data recorded in said program, etc. recording server through a communication line, or capable of having the user terminal to download and execute the recorded program, a service providing method to which the system is applied, and a computer program to implement the system.

### 2. Description of Related Art

In business practice such as merchandising, which is essential to growth of industry, sales promotion, activity for getting customers, etc. are critical. Thus, the sales promotion and the activity for getting customers, and provision of a variety of services and sales of items such as advertising or description of items over the Internet, events at various stores, advertisements, etc., by means of various media like magazines, television broadcasting and radio broadcasting, etc. are being conducted.

Recent development of the Internet has been remarkable, and the sales promotion over the Internet has been increasing its share, while the promotional sales activity, etc. utilizing various media as described above are deployed.

For instance, sales promotion takes place in the form of banner advertisements to be displayed around a frame showing the screen where an online program such as a so-called online game is executed over the Internet as provision of service.

In addition, although it is true that with development of the Internet, customers can easily purchase an item through the Internet environment, the sales activity at shops that encourages consumers, customers, to come to a shop and purchase an item is also important.

However, it is on rare occasions that users who execute online game being provided as service actively browse banner advertisements being displayed around the frame and actively access to a Web page to which a banner advertisement is linked, which may not have adequate advertising effects.

In addition, although managers of a variety of stores hope to encourage customers to physically visit their stores as well as sales activity over the Internet, it is difficult to effectively conduct promotional sales activity that encourages customers to direct their steps to stores.

### BRIEF SUMMARY OF THE INVENTION

The present invention has been made in light of the circumstances mentioned above, and aims to provide a data communication control system, a communication system, a service providing method, and a computer program that can effectively implement sales promotion and activity for getting customers such as advertising, through a medium such as the Internet.

A first invention is a data communication control system comprising: recording means for recording a program or data; and data communication controlling means for causing a user terminal to execute the program recorded in said recording means through a communication line, or for downloading the recorded program or data to the user terminal, characterized by comprising: code train issuing means for issuing a code train and also for transmitting said code train to said data communication controlling means; code train receiving means for receiving the code train transmitted from said user terminal through the communication line; code train judging means for judging whether or not said received code train conforms with predetermined condition corresponding to said issued code train; and authorizing means for authorizing the user terminal that transmitted said code train to execute said program, continue the program being executed, download the program, or download data, when said received code train conforms with said predetermined condition.

According to the invention, the data communication control system comprises recording means for recording a program or data, and data communication controlling means for causing a user terminal to execute the program recorded in said recording means through a communication line, or for downloading the recorded program or data to the user terminal.

Above mentioned data communication control system comprises: code train issuing means for issuing a code train used as, for example, keyword or password and also for transmitting said code train to said data communication controlling means; code train receiving means for receiving the code train when the code train is transmitted from said user terminal through the communication line; code train judging means as means for judging whether or not said received code train conforms with predetermined condition corresponding to said issued code train; and authorizing means as means for authorizing the user terminal that transmitted said code train to execute said program, continue the program being executed, download the program, or download data, when said received code train conforms with said predetermined condition.

According to a data communication control system of the invention, code train issuing means issues a code train to be used as a keyword, etc. to a sponsor, who is a provider of items, etc., for instance, and the sponsor informs a user operating a user terminal, who is a target of items, etc. to be provided, of the code train and causes him/her to recognize it. The user, the target of items, etc., to be provided who has obtained the code train transmits the code train from the user terminal such as a mobile phone to code train receiving means over a communication line such as the Internet. The code train receiving means receives the transmitted code train, and code train judging means judges if the received code train conforms with predetermined conditions corresponding to the code train issued by the code train issuing means. Then, when it conforms with said predetermined conditions, authorizing means authorizes the user terminal that transmitted the code train to execute a program, continue the program being executed, and download the program and/or data.

With such a configuration, for the purpose of executing a program such as a game program or continuing a program being executed, or downloading data whose content is music, etc., or data such as an electronic book, a target of items, etc. to be provided, actively acts toward various media in order to obtain a code train, in other words, he/she accesses to a Web page where advertisements containing a code train are displayed, uses a store, purchases a magazine, and watches television broadcasting or listens to radio broadcasting. Consequently, the target of an item, etc., to be provided will preferentially uses stores where he/she can obtain a code train, for instance, or pay close attention to advertisements that show a code train of a magazine that he/she has bought.

Thus, compared with information unilaterally transmitted to a target of items, etc. to be provided, this could enhance the advertising effects and effectively implement the sales promotion or the activity for getting customers, such as advertisements.

In addition, it is possible to judge validity of the code train by judging whether the received code train conforms with the predetermined conditions, for instance, whether the received code train is same as the code train issued by the sponsor. This can prevent any user who transmitted an illegal code train from executing a program, continuing a program being executed, and downloading a program and/or data.

Hence, unless a user who is a target of items, etc. to be provided obtains and transmits a valid code train, he/she can neither execute a program such as a game program on his/her user terminal, nor continue execution of a game program, nor download data such as music or an electronic book. This encourages him/her to actively find a code train, store in a medium, or actively visit stores, etc. where he/she can get a code train. Consequently, the sales promotion or the activity for getting customers, such as advertisement, can be effectively implemented.

Now, respective means mentioned above are configured as one or more server apparatuses.

When each said means is configured as one server, it can totally manage every process in said respective means. Then, as management of multiple apparatuses is not required, workload needed for a management task can be reduced, processing speed can be improved, and cost burden can be alleviated because preparation of more than one apparatus is no longer needed.

Even when said respective means are configured as more than one server apparatuses, processes can be totally managed when they are placed in proximity to each other rather than being remotely positioned, which can thus alleviate workload necessary for the management task.

A second invention is a data communication control system comprising: recording means for recording a program or data; a first server capable of notifying a code train to a user terminal through a communication line; and data communication controlling means for allowing the program or data recorded in said recording means to be executed from the user terminal via the communication line, or for causing said user terminal to download the recorded program or data, characterized by comprising: code train receiving means for receiving the code train transmitted from said user terminal through the communication line; code train judging means for judging whether said received code train conforms with a predetermined condition; and authorizing means for authorizing said user terminal that transmitted said code train to execute said program, continue the program being executed, download the program or download the data, when said received code train conforms with said predetermined condition.

According to the invention, the data communication control system comprises recording means for recording a program or data, a first server capable of notifying a code train to a user terminal through a communication line, and data communication controlling means for allowing the program or data recorded in said recording means to be executed from the user terminal via the communication line, or for causing said user terminal to download the recorded program or data.

Said data communication control system comprises: code train receiving means for receiving the code train transmitted from said user terminal through the communication line; code train judging means for judging whether said received code train conforms with a predetermined condition; and authorizing means for authorizing said user terminal that transmitted said code train to execute said program, continue the program being executed, download the program or download the data, when said received code train conforms with said predetermined condition.

A first server that is connected to a communication line such as the Internet and managed by a sponsor who is a provider of items, etc. issues a code train to be used as a keyword, etc. to a user, being a target of items, etc., to be provided, who is a prospective customer and uses such a user terminal as a mobile phone connected to the communication line. When the user who obtained the issued code train transmits it from the user terminal via the communication line to code train receiving means for receiving a code train, it is judged whether the received code train conforms with predetermined conditions, or not. When the received code train conforms with the predetermined conditions, data communication controlling means authorizes the user terminal that transmitted the code train to execute a program, continue a program being executed, download a program or download data.

With such a configuration, for the purpose of executing a program such as a game program, continuing a program being executed, downloading a program or downloading data, the user, the target of items, etc. to be provided, actively acts toward various media in order to obtain a code train, in other words, he/she accesses to a Web page where advertisements containing a code train are displayed, etc.

Thus, compared with information unilaterally transmitted to a target of items, etc. to be provided, this could enhance the advertising effects and effectively implement the sales promotion or the activity for getting customers, such as advertisements.

In addition, it is possible to judge validity of the code train by judging whether the received code train conforms with the predetermined conditions, e.g., whether the received code train is same as the code train issued from the first server, or not. This can prevent any user who transmitted an illegal code train from executing a program, continuing a program being executed, and downloading a program and/or data.

Hence, unless a user who is a target of items, etc. to be provided obtains and transmits a valid code train, he/she cannot execute a program such as a game program on his/her user terminal.

In addition, as the user can neither continue to execute a game program, nor download data such as music or an electronic book, he/she will strongly recognize a code train or actively visit stores, etc., where he/she can obtain a code train, which could effectively implement the sales promotion or the activity for getting customers, such as advertising.

A third invention is a data communication control system comprising: recording means for recording a program or data; a first server capable of transmitting a code train to a user terminal through a communication line; and data communication controlling means for allowing said user terminal to execute the program or data recorded in said recording means, or for downloading the program from said recording means to said user terminal, characterized by comprising: means for, by preliminarily downloading, causing said user terminal to execute a management program that causes said user terminal to receive and record the code train transmitted from said first server, and to transmit said recorded code train to a predetermined destination from said user terminal; code train receiving means for receiving the code train transmitted from said user terminal via the communication line; code train judging means for judging whether or not said received code train conforms with the predetermined condition; and authorizing means for authorizing said user terminal that transmitted said code train to execute said program, continue the program being executed, download the program, or download the data, when said received code train conforms with said predetermined condition.

According to the invention, the data communication control system comprises recording means for recording a program or data, a first server capable of transmitting a code train to a user terminal through a communication line, and data communication controlling means for allowing said user terminal to execute the program or data recorded in said recording means, or for downloading the program from said recording means to said user terminal.

Said data communication control system comprises, means for, by preliminarily downloading, causing said user terminal to execute a management program that causes said user terminal to receive and record the code train transmitted from said first server, and to transmit said recorded code train to a predetermined destination from said user terminal; code train receiving means for receiving the code train transmitted from said user terminal via the communication line; code train judging means for judging whether or not said received code train conforms with the predetermined condition; and authorizing means for authorizing said user terminal that transmitted said code train to execute said program, continue the program being executed, download the program, or download the data, when said received code train conforms with said predetermined condition.

The system in advance downloads a management program to a user terminal for executing a program and causes it to execute the management program for receiving as data a code train transmitted from a first server managed by, for instance, a sponsor, who is a provider of items, etc., recording the code train, and causing the user terminal to transmit the recorded code train.

The first server connected to a communication line such as the Internet issues/transmits a code train to be used as a keyword to a user terminal connected to the communication line, and causes the user terminal to record it.

Then, when execution of a program, continuation of a program being executed, downloading of a program or downloading of data takes place, the code train is transmitted from the user terminal to code train receiving means. Code train judging means judges whether the received code train conforms with predetermined conditions, or not. When the received code train conforms with the predetermined conditions, authorizing means authorizes the execution and continuation of a program or downloading of a program and/or data at the user terminal.

With such a configuration, for the purpose of executing a program such as a game program, or continuing a program being executed, downloading data whose content is music, etc. or data such as an electronic book, a user actively acts toward various media in order to obtain a code train, in other words, he/she accesses to a Web page where advertisements containing a code train are displayed, etc.

Thus, compared with information unilaterally transmitted to a target of items, etc. to be provided, this could enhance the advertising effects and effectively implement the sales promotion or the activity for getting customers, such as advertisements.

Yet, since giving and receiving of a code train as data is carried out automatically or as per a user's instructions, there will be no transcription error or inputting error of a code train even when the user does not pay special attention, which thus facilitates the operation.

In addition, it is possible to judge validity of the code train by judging whether the received code train conforms with the predetermined conditions, for instance, whether the received code train is same as the code train issued from a first server, or not. This can prevent any user who transmitted an illegal code train from executing a program, continuing a program being executed, and downloading a program and/or data.

A fourth invention is a data communication control system in any one of the data communication control system according to the first to third inventions, wherein said program is a program that starts or continues according to points associated with the user, and the authorizing means for authorizing execution of said program or continuation of the program changes said points depending on said code train.

According to the invention, said program is a program that starts or continues according to points associated with the user.

Said authorizing means for authorizing execution of said program or continuation of the program is means for changes said points depending on said code train.

As a program that starts or continues execution depending on points as points associated with a user vary, the system provides a user terminal with a game program such as a poker game or roulette that reduces a user's own points, which are points associated with a user, as the game progresses, and that terminates when his/her own points are played out, gives points according to conditions a code train conforms with the user executing the game program, as his/her own points, and authorizes the user who has been given his/her own points to execute or continue the game program.

With such a configuration, for the purpose of executing a game, or continuing a game program being executed, a user actively acts toward various media in order to obtain a code train.

Thus, compared with information unilaterally transmitted to a target of items, etc. to be provided, this could enhance the advertising effects. In particular, as users are assigned their own points that are different depending on the transmitted code train, their own points to be assigned may rise or fall depending on the transmitted code train, which could provide a new game wherein assignment of one's own points has a character as a game.

When a program to be executed is, for instance, a game program that adds user's own points as the game progresses, and that terminates when predetermined one's own points are exceeded, points corresponding to a code train may be deduced as one's own points, from the user's own points or user terminal's own points.

A fifth invention is a data communication control system in the data communication control system of the fourth invention, and further comprises: point managing means for associating identification information for identifying the user operating said user terminal or the user terminal with points of said user or user terminal identified by said identification information and records them; code train information managing means for associating the code train with the points and records them; and extracting means for extracting the points associated with the code train received from said user terminal, from said code train information managing means; wherein the authorizing means for authorizing execution of said program, continuation of the program being executed, downloading of the program, or downloading of the data causes said point managing means to change the points associated with said identification information based on the points extracted by said extracting means.

According to the invention, a data communication control system comprises: point managing means for associating identification information for identifying the user operating said user terminal or the user terminal with points of said user or user terminal identified by said identification information and records them; code train information managing means for associating the code train with the points and records them; and extracting means for extracting the points associated with the code train received from said user terminal, from said code train information managing means.

Said authorizing means for authorizing execution of said program, continuation of the program being executed, downloading of the program, or downloading of the data comprises means for changing the points associated with said identification information by said point managing means based on the points extracted by said extracting means.

As a program that starts or continues execution depending on points as points associated with a user vary, the system provides a user terminal with a game program such as a poker game that reduces points to be used as a bet point, and that terminates when the points are played out, and a user of the user terminal who is provided with the game obtains a code train to be issued as a keyword through a variety of media such as the Internet, various stores, magazines, and television broadcasting and radio broadcasting, and transmits the code train from the user terminal to code train receiving means.

Then, in a program that, based on the received code train, extracts points from code train information managing means that associates a code train with points and records them, changes, for instance, reduces the points necessary for executing a game based on the extracted points, and terminates when the one's own points are gone, points associated with identification information recorded in point managing means are added to the one's own points.

Now, as the points to be added to the one's own points have been associated with a code train and recorded in the code train managing means, it is possible to easily change points to be assigned depending on the code train by modifying a correlation of the code train recorded in the code train information managing means and the points. Yet, as a result of often modifying the relationship between the code train and the points, the effect of protecting against any fraudulent act such as adding points based on an illegally obtained code train can be improved.

A sixth invention is a data communication control system in the data communication control system of the fifth invention, and further comprises code train generating means for generating a code train based on said identification information, wherein said point managing means associates the identification information, the code train generated based on said identification information and the points.

According to the invention, the data communication control system comprises code train generating means for generating a code train based on said identification information.

Said point managing means records the code train generated based on said identification information and the points.

Any man-made work required to determine a code train can be alleviated by automatically generating a code train based on identification information. In addition, a code train can be issued to respective users identified by the identification information, when it is determined whether or not points can be extracted based on the identification information used in generation of the code train, by associating the generated code train with the points and recording them in the point managing means. Accordingly, a code train can be issued only to respective users who have registered the identification information as a member in advance, which enables a number of users to be held as a member by establishing a system that favors the members. Furthermore, the members could be given more favorable treatment by setting the points associated with the code train that is only available to the respective users higher than those associated with the code train that is available to everyone.

A seventh invention is a data communication control system in the data communication control system of the fifth or sixth invention, said point managing means associates a history of the code train related to the change of the points with the identification information and records them, and said predetermined condition is determined based on the history recorded in association with said identification information.

According to the invention, said point managing means associates a history of the code train related to the change of the points with the identification information and records them, and determines said predetermined condition based on the history recorded in association with said identification information.

By recording history of code trains used for changing points and determining predetermined conditions based on the recorded history, the system can authorize the code train whose usage was recorded as a history to execute a program or continue a program being executed, or prohibit it from executing a program or continuing a program being executed. Thus, this can prevent a user from changing his/her own points by transmitting a same code train many times.

An eighth invention is a data communication control system in any one of the data communication control system of the fifth to seventh inventions, wherein said point managing means records data related to available period associated with the code train; and said system further comprises condition determining means for determining said predetermined condition, based on the data related to the available period recorded in association with said code train.

According to the invention, said point managing means records data related to available period associated with the code train; and said system further comprises means for determining said predetermined condition, based on the data related to the available period recorded in association with said code train.

When predetermined conditions are determined based on a valid period associated with a code train, a user's own points will not vary according to the points obtained unless he/she can promptly obtain a code train and transmit the obtained code train quickly. Thus, this could encourage the user to obtain a code train quickly and send it quickly, which can thus enhance a short-term ability to pull in more customers.

In any of the systems described above, it is assumed that a mobile phone and a portable computer such as PDA (Personal Digital Assistants) is a user terminal. Then, as a user can move while carrying a user terminal, he/she can easily obtain a code train to be issued from a medium of stores, etc. that he/she should otherwise visit and transmit it. This could increase convenience at users of user terminals, and enhance the ability to pull in more customers in a location where movement of users is necessary.

A ninth invention is a data communication control system in any one of the data communication control system of the fifth to eighth invention, and comprising: attribute information transmitting means for causing said user terminal to input attribute information indicative of attributes of the user identified by the identification information and to transmit the inputted attribute information, and further comprises: means for recording said attribute information in association with the identification information in said point managing means, when receiving from said user terminal the attribute information indicative of the attributes of the user identified by the identification information; and privilege granting means for granting a privilege to the user identified by the identification information recorded in association with the attribute information when the points recorded in association with said point managing means satisfy a predetermined numeric condition.

According to the invention, the data communication control system comprises attribute information transmitting means for causing said user terminal to input attribute information indicative of attributes of the user identified by the identification information and to transmit the inputted attribute information.

Also, the data communication control system comprises means for recording said attribute information in association with the identification information in said point managing means, when receiving from said user terminal the attribute information indicative of the attributes of the user identified by the identification information; and privilege granting means for granting a privilege to the user identified by the identification information recorded in association with the attribute information when the points recorded in association with said point managing means satisfy a predetermined numeric condition.

By executing the process of granting to users whose points meet predetermined numerical conditions or exceed predetermined points privileges such as presentation of an item, etc. through exchange of points, etc., it is possible to motivate users to use a program. In addition, placed the limitation that the user should input attribute information such as an address, age, sex and hobby, etc., in the user terminal and transmit it in order to receive a privilege, users will actively register attributes, which could make it easier to keep track of users' attributes, compared with an approach such as a questionnaire.

A tenth invention is a communication system which is used for providing services, and comprises a service server capable of communicating with a user terminal through a communication line; and code train issuing means for issuing a code train and also transmitting said code train to said service server, and is characterized by comprising: code train receiving means for receiving the code train transmitted from said user terminal through the communication line; code train judging means for judging whether or not said received code train conforms with the predetermined condition corresponding to said issued code train; and authorizing means for authorizing the user terminal that transmitted said code train to provide services or continue services being provided, when said received code train conforms with said predetermined condition.

According to the invention, the communication system is used for providing services, and comprises a service server capable of communicating with a user terminal through a communication line; and code train issuing means for issuing a code train and also transmitting said code train to said service server.

Said communication system is characterized by comprising: code train receiving means for receiving the code train transmitted from said user terminal through the communication line; code train judging means for judging whether or not said received code train conforms with the predetermined condition corresponding to said issued code train; and authorizing means for authorizing the user terminal that transmitted said code train to provide services or continue services being provided, when said received code train conforms with said predetermined condition.

A system issues/outputs a code train to be used as a keyword and also transmits the code train to a service server. One who has obtained the code train issued through various media such as the Internet, various stores, magazines and television broadcasting and radio broadcasting, etc., operates a user terminal and transmits the code train to a service server that uses a computer. Based on the received code train, the service server provides services such as provision of a game or downloading of music, etc. Then, in order to receive services, one who receives services actively acts toward various media in order to obtain a code train, in other words, he/she accesses to a Web page where advertisements containing a code train are displayed, uses a store, purchases a magazine, and watches television broadcasting or listens to radio broadcasting. Consequently, he/she will preferentially use stores where he/she can obtain a code train, for instance, or pay close attention to advertisement that shows a code train of a magazine that he/she has bought.

Thus, compared with information unilaterally transmitted to individuals, this could enhance the advertising effects and effectively implement the sales promotion or the activity for getting customers, such as advertisements.

An eleventh invention is a service providing method which comprises a service server used for providing services, and code train issuing means for issuing a code train and also for transmitting said code train to said service server, and provides services to a user terminal that communicates with said service server through a communication line, characterized by comprising the steps of: issuing the code train and also transmitting said code train to said service server; receiving the code train transmitted from said user terminal, through the communication line; judging whether or not said received code train conform with the predetermined condition corresponding to said issued code train; and authorizing the user terminal that transmitted said code train to provide services or continue the service being provided, when said received code train conforms with said predetermined condition.

According to the invention, in the service providing method, a service server used for providing services, and code train issuing means for issuing a code train and also for transmitting said code train to said service server are provided, and further comprises code train issuing means for transmitting code train to said service sever.

In the above service providing method, the code train is issued and also transmitted to said service server; the code train transmitted from said user terminal, through the communication line is received; whether or not said received code train conform with the predetermined condition corresponding to said issued code train is judged; and the user terminal that transmitted said code train is authorized to provide services or continue the service being provided, when said received code train conforms with said predetermined condition.

The system issues/outputs a code train to be used as a keyword to a sponsor, a provider of items, etc., and also transmits the code train to a service server. A user who has obtained the code train issued through various media such as the Internet, various stores, magazines and television broadcasting and radio broadcasting is a target of items, etc. to be provided, who may be a prospective customer, and is using user terminal transmits the code train to a service server that uses a computer, by using the user terminal. Based on the received code train, the service server provides services such as provision of a game and downloading of music, etc. Then, in order to receive services, one who receives services actively acts toward various media in order to obtain a code train, in other words, he/she accesses to a Web page where advertisements containing the code train are displayed, uses a store, purchases a magazine, and watches television broadcasting or listens to radio broadcasting. Consequently, he/she will preferentially use stores where he/she can obtain a code train, for instance, or pay close attention to advertisement that shows a code train of a magazine that he/she has bought.

Thus, compared with information unilaterally transmitted to individuals, this could enhance the advertising effects and effectively implement the sales promotion or the activity for getting customers, such as advertisements.

A twelfth invention is a computer program that causes a computer comprising data communication controlling means for communicating with a user terminal through a communication line, to provide a program or data to said user terminal, and is characterized by causing the computer to execute the steps of: causing the computer to receive a code train transmitted from code train issuing means; judging whether or not said received code train conforms with predetermined condition corresponding to the code train transmitted from said code train issuing means when receiving the code train transmitted from said user terminal through the communication line; and authorizing said user terminal to execute said program, continue the program being executed, download the program or download the data, when said received code train conforms with predetermined condition.

According to the invention, the computer program that causes a computer comprising data communication controlling means for communicating with a user terminal through a communication line, to provide a program or data to said user terminal, and causes the computer to execute the steps of: causing the computer to receive a code train transmitted from code train issuing means; judging whether or not said received code train conforms with predetermined condition corresponding to the code train transmitted from said code train issuing means when receiving the code train transmitted from said user terminal through the communication line; and authorizing said user terminal to execute said program, continue the program being executed, download the program or download the data, when said received code train conforms with predetermined condition.

Running on a computer such as a web server computer, a computer program issues a code train to be used as a keyword through various media such as the Internet, various stores, magazines, and television broadcasting and radio broadcasting to a user, a target of items, etc., to be provided, who may be a prospective customer, via a sponsor, a provider of items, etc., while providing to a user terminal a game such as a poker that reduces one's own points to be used as a bet point, for instance, and is implemented. The user who received the issued code train transmits the code train from the user terminal. Based on the code train received from the user terminal, since the computer program authorizes the user to execute a program such as a game or continue a program being executed, the user, to execute the game or continue the program being executed, actively acts toward various media in order to obtain a code train, in other words, he/she accesses to a Web page where advertisements containing a code train are displayed, uses a store, purchases a magazine, and watches television broadcasting or listens to radio broadcasting. Consequently, he/she will preferentially use stores where he/she can obtain a code train, for instance, or pay close attention to advertisement that shows a code train of a magazine that he/she has bought.

Thus, compared with information unilaterally transmitted to individuals, this could enhance the advertising effects and effectively implement the sales promotion or the activity for getting customers, such as advertisements.

The above and further objects and features of the invention will more full be apparent from the following detailed description with accompanying drawings.

### BRIEF DESCRIPTION OF THE SEVERAL VIEWS OF THE DRAWINGS

FIG. 1 is an illustration conceptually showing a corporate structure using a data communication control system of the present invention;
FIG. 2 is a block diagram showing a configuration of the data communication control system of the present invention;
FIG. 3 is an illustration conceptually showing contents of records of one's own point database a game server used in the data communication control system of the present invention comprises;
FIG. 4 is an illustration conceptually showing contents of records of a point database a game server used in the data communication control system of the present invention comprises;
FIG. 5 is a functional block diagram of the game server used in the data communication control system of the present invention;
FIG. 6 is a flow chart showing a process of registering a code train of the game server and a management server to be used in the data communication control system of the present invention;
FIG. 7 is a flow chart showing a process of outputting a code train of the game server and a sponsor server to be used in the data communication control system of the present invention;
FIG. 8 is a flow chart showing a process of adding one's own points of the game server and the user terminal to be used in the data communication control system of the present invention;
FIG. 9 is a flow chart showing the process of adding one's own points of the game server and the user terminal to be used in the data communication control system of the present invention;
FIG. 10 is an illustration showing code train request information to be outputted from the user terminal to be used in the data communication control system of the present invention;
FIG. 11 is an illustration showing an initial image of a game to be outputted from the user terminal to be used in the data communication control system of the present invention;
FIG. 12 is a flow chart showing a process of assigning amenity of the game server and the user terminal to be used in the data communication control system of the present invention;
FIG. 13 is an illustration conceptually showing record contents of the point database the game server of the present invention comprises;
FIG. 14 is a flow chart showing a process of registering an identifier of the game server and the management server to be used in the data communication control system of the present invention;
FIG. 15 is a flow chart showing a process of outputting a code train of the game server and the sponsor server to be used in the data communication control system of the present invention;
FIG. 16 is a flow chart showing a process of adding one's own points of the game server and the user server to be used in the data communication control system of the present invention;
FIG. 17 is a flow chart showing a process of downloading a management program of the game server and the user terminal to be used in the data communication control system of the present invention; and
FIG. 18 is a flow chart showing a process of receiving a code train of the game server, the user terminal and the sponsor server to be used in the data communication control system of the present invention.

### DETAILED DESCRIPTION OF THE PRESENT INVENTION

The present invention will be described hereinafter in details based on drawings showing the Embodiments thereof.

### Embodiment 1.

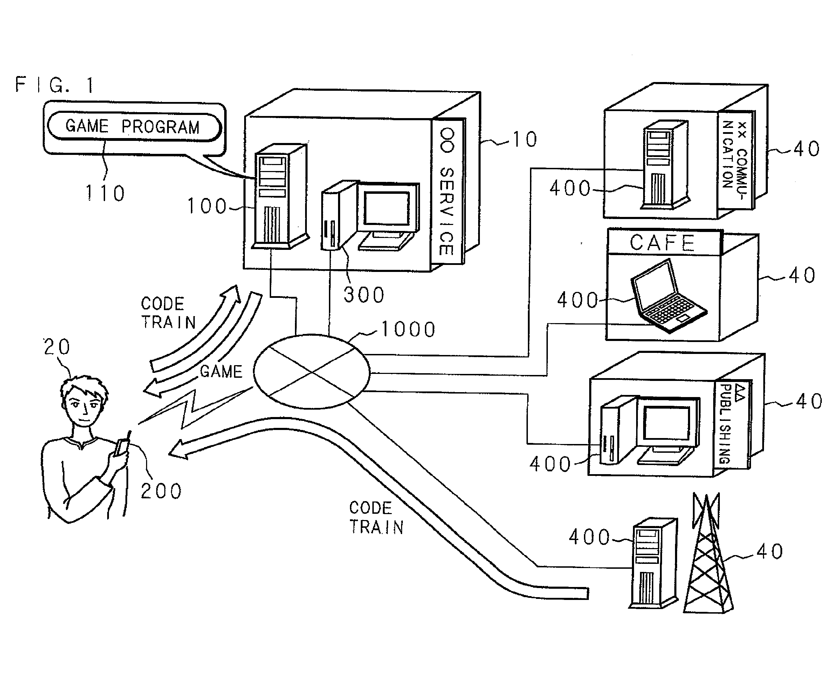

FIG. 1 is an illustration conceptually showing a corporate structure that uses a data communication control system of the present invention.

In the data communication control system shown in FIG. 1, a game server 100 that uses as a web server computer connected to a communication line 1000 such as the Internet provides a game program 110 as an online program for executing a game such as a poker, dice, slot and roulette.

Then, a user 20 who plays a game by operating a user terminal 200 such as a mobile phone connected to the communication line 1000 can be provided with the game by executing the game program 110 recorded in a game server 100 or downloading the game program 110 from the game server 100.

Any data content of which is a program that is not the game program 110, music, etc. or any data of an electronic book, etc. may also be downloaded.

The game program 110 provided to the user 20 as an online program is a program that can be started or continued according to user's own points that are points associated with the user 20, as his/her own points vary.

The game server 100 is managed by a service business entity 10. In addition to the game server 100, the service business entity 10 also manages a management server that can communicate with the game server 100.

A person in charge of operation of the management server 300 operates the management server 300 and manages reception and updating, etc. of various information being recorded in the game server 100.

The service business entity 10 cooperates with a commercial entity 40 such as a sponsor, that is a provider of items, etc. engaged in commercial activity such as provision of a variety of advertisements and services, and sales of items, etc. through such a medium as Web pages, stores, magazines, television broadcasting and radio broadcasting, etc. The commercial entity 40 such as a sponsor, etc. manages a sponsor server 400 that uses a computer for communications. The sponsor server 400 communicates with the game server 100 through the communication line 1000.

Thus, the data communication control system of the invention facilitates inter-group business cooperation and contributes to overall expansion of industry.

Although in this Embodiment the description takes as an example a data communication control system that provides games as services, the present invention may be applied to provision of any services other than games. In such a case, the game server 100 shall be used as a service server that provides services.

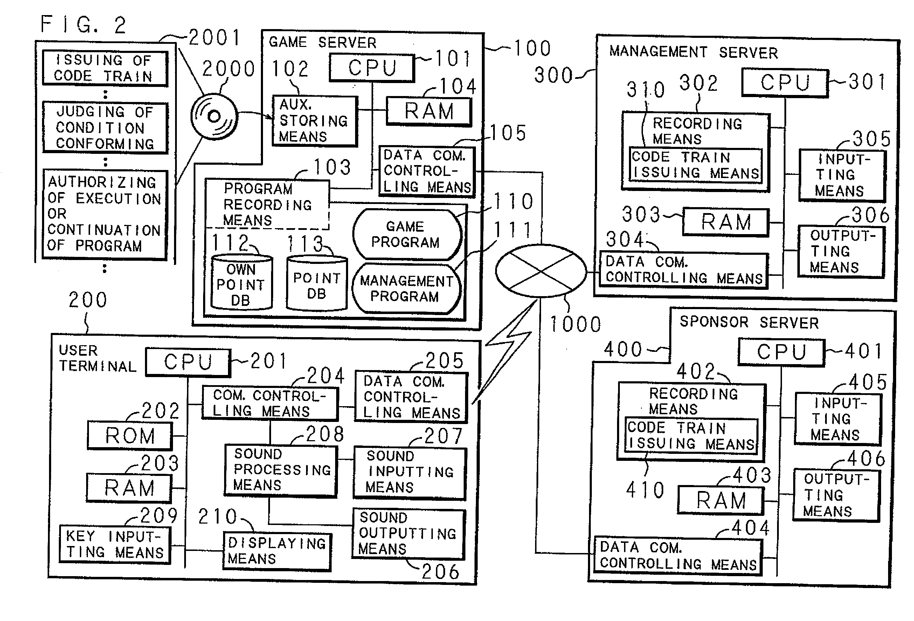

FIG. 2 is a block diagram showing a configuration of the data communication control system of the present invention.

The game server 100 comprises a CPU (Central Processing Unit) 101 that controls the entire apparatus, auxiliary storing means 102 such as a CD-ROM drive, etc. that reads various information such as a computer program 2001 and data from a storage medium 2000 such as a CD-ROM (Compact Disk Read Only Memory) that stores various information such as the computer program 2001 of the present invention and data, etc., program recording means 103, such as a hard disk and RAID (Redundant Arrays of Inexpensive Disks) that records the various information such as the computer program and the data, etc. that the auxiliary storing means 102 has read, a RAM (Random Access Memory) 104 that temporarily stores the information, and data communication controlling means 105 such as a modem and route connected to the communication line 1000.

Then, the web server computer operates as a game server 100 by reading the computer program 2001 of the present invention from the program recording means 103, having it stored in the RAM 104, and causing the CPU 101 to execute it.

The program recording means 103 records information described in such a markup language as compactHTML (compact Hyper Text Markup Language) for outputting a Web page from the user terminal 200, and various game programs 110 that are provided through a Web page outputted from the user terminal 200 and described in such programming language as JAVA (registered trademark).

It also records a management program 111 that causes the user terminal 200 to download and execute the computer program 2001 of the invention, in advance.

Modes of using the management program 111 are hereinafter described in Embodiment 3.

Furthermore, a part of a storage area of the program recording means 103 is used as various databases such as a one's own point database (own point DB) 112 that is point managing means that associates data of the user 20, being a target of items, etc. to be provided, who uses the user terminal 200 and may be a prospective customer or identification information that identifies user terminals with data of the user 20 identified by the identification information or user terminal's own points and records them, and a point database (point DB) 113 that is code train information managing means that associates a code train to be used as a keyword with points and records them. Accesses are made to the various databases, as necessary, in response to processes of CPU 101, and information recording/reading are executed.

Rather than using the part of the storage area of the program recording means 103 as the various databases such as the one's own point database 112 or the point database 113, etc., a part of storage area of other apparatuses connected to the game server 100 may be used as the various databases such as the one's own point database 112 or the point database 113, etc., to which accesses are made, as necessary.

The user terminal 200 comprises CPU 201 that controls various processes such as communication process or speech processing and ROM 202 and RAM 203 that record such information as programs and data, etc. needed for the various processes.

In addition, CPU 201 controls communication controlling means 204 that controls input/output and transmission/reception of an audio signal. The communication controlling means 204 controls data communication controlling means 205 such as an antenna that transmits and receives information such as a digital audio signal and a game program 110 via the communication line 1000.

The communication controlling means 204 controls sound processing means 208 that converts audio signals to be outputted from sound outputting means 206 such as a speaker or input to sound inputting means 207 such as a microphone.

The conversion by the sound processing means 208 refers to a process of converting a digital signal to be outputted from the sound outputting means 206 into an analog signal, and of converting an analog audio signal inputted from the sound inputting means 207 into a digital audio signal.

By control of CPU 201, the user terminal 200 receives input from key inputting means 209 like pushbuttons, etc., that receives key input such as a code train or various commands, and causes displaying means 210 such as a liquid crystal display for displaying various information such as information entered by keys and information to be sent/received, to display necessary information.

The management server 300 comprises CPU 301, recording means 302, a RAM 303, data communication controlling means 304, inputting means 305 such as a keyboard and a mouse, etc., and outputting means 306 such as a monitor and a printer, etc.

The management server 300 comprises various means such as code train issuing means 310 for issuing a code train needed for execution of the game program 110, in such a configuration that they are recorded in recording means 302 as various program means that implement different processes, by executing them under the control of CPU 301.

The sponsor server 400 comprises CPU 401, recording means 402, a RAM 403, and data communication controlling means 404, and inputting means 405 and outputting means 406.

The sponsor server 400 comprises various means such as code train issuing means 410 for issuing a code train needed for execution of the game program 110, in such a configuration that they are recorded in recording means 402 as various program means that implement different processes by executing them under the control of CPU 401.

In the following, record contents of various databases provided in the game server 100 are describe.

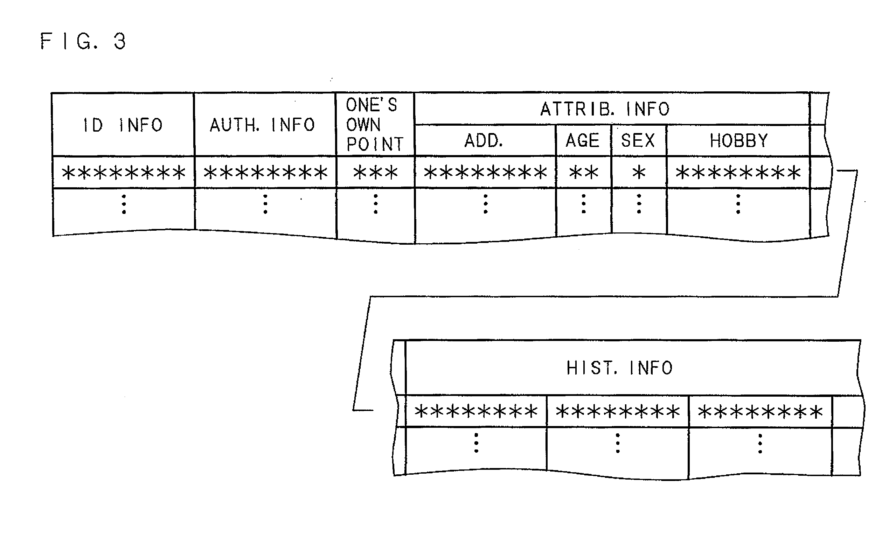

FIG. 3 is an illustration conceptually showing the record contents of the one's own point database 112 the game server 100 comprises that is used for the data communication control system of the present invention.

As a record, the one's own point database 112 records such items as authentication information that is associated with the identification information for identifying the user 20 or the user terminal 200 and that is used for authentication of the user 20 or the user terminal 200, his/her own points assigned to the user 20, attribute information showing an attribute of the user 20, and history information, etc.

The identification information is information for identifying the user 20 or the user terminal 200. In addition to a name or a nickname, a user ID assigned by the game server 100 is used as the user-identifying information. As the identification information for identifying the user terminal 200, an information such as a telephone number and the like is used.

The authentication information is information to be used as a password that is designed to prevent others from using identification information in a situation not intended by the user 20, where the identification information is leaked or the user terminal 200 is stolen.

One's own points refer to points that are required for the user 20 to execute a game provided from the game server 100, continue a game being executed, download various programs or download data, and receive privileges to be granted by the service business entity 10.

Every time the user receives service such as execution of a game or granting of a privilege, a predetermined numeric value will be deducted from his/her own points. When he/she sends a code train from the user terminal 200 to the game server 100 by the method to be described hereinafter, a numeric value associated with the transmitted code train will be added to his/her own points.

In addition, depending on the result of a game the user 200 plays, his/her own points may be added.

Although the Embodiment described herein shows a configuration in which a game to execute is provided as service by subtracting the user 20's own points, the present invention is not limited thereto and may be applied to a game that changes the user 20's own points, and also can be executed or continued depending on the varying user 20's own points.

For instance, the invention can be applied to a game wherein user's own points increase depending on length of game execution or number of times thereof, and the game ends when his/her own points reach predetermined points. In such a case, to execute a game or continue a game being executed, the user transmits a code train from the user terminal 200 to the game server 100 with the method described hereinafter. With this, a numeric value associated with the transmitted code train is subtracted from his/her own points.

In addition, when the invention is applied to the configuration wherein execution of a game increases user's own points, they will also increase when the user receives service such as granting of a privilege, etc.

Attribute information refers to information showing the user 20's attributes such as an address, age, sex and hobbies.

History information shows history of a used code train. Specifically, as a code train used for adding one's own points is recorded as a history record, it is possible to prevent one user 20 from using a same code train many times.

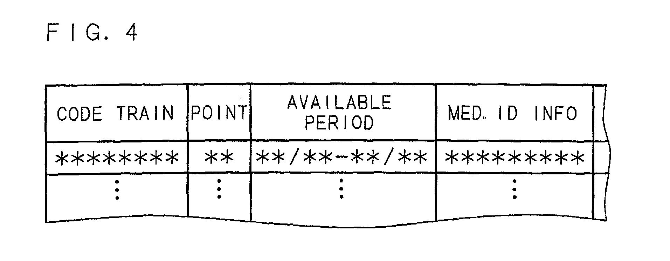

FIG. 4 is an illustration conceptually showing record contents of the point database 113 the game server 100 comprises that is used in the data communication control system of the present invention.

The point database 113 records various items such as points, available period, and medium identification information, etc. that are associated with a code train to be used as a keyword.

A code train is information to be issued as a keyword, and is a train of such codes as alphabetic characters, numeric characters, and symbols, etc.

A point is a numeric value to be given to the user 20 as his/her own point when the game server 100 receives a code train from the user terminal 200.

A available period is one of measures for the game server 100 to judge whether the user 20 should be given his/her own point or not, when it receives a code train from the user terminal 200. The user is given his/her own points based on the code train, only when the time when the code train is received within the available period that is associated and recorded.

Medium identification information is information for identifying the commercial entity 40, and the medium identification information to be given in advance to the commercial entity 40 that has a right to issue a recorded code train to the user 20 is recorded.

There may be more than one media identification information because, in some cases, a plurality of commercial entities 40 may issue one code train.

In the following, various functions that are implemented by hardware and software that the game server 100 used in the data communication control system of the invention comprises are described.

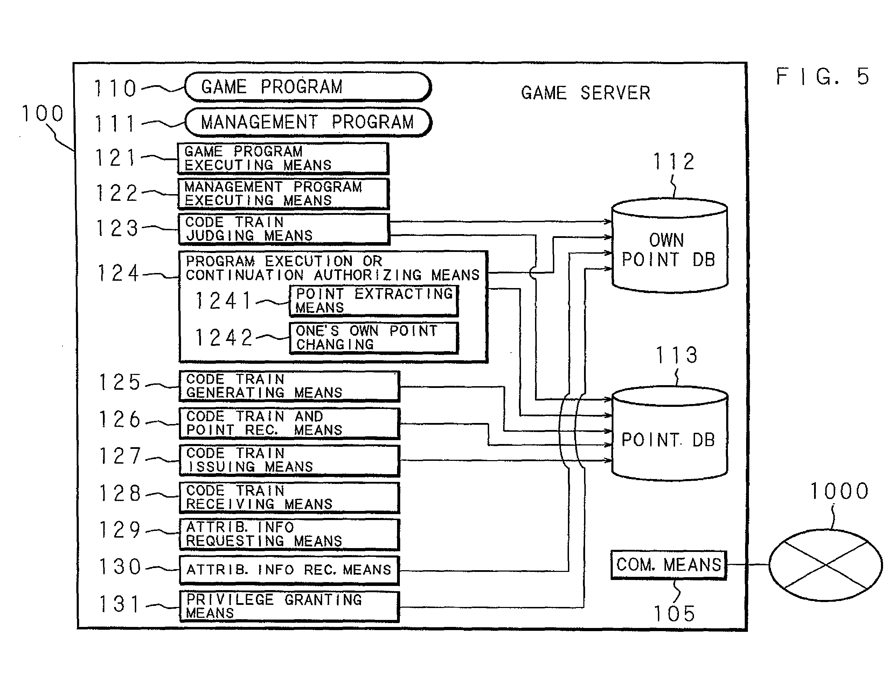

FIG. 5 is a functional block diagram of a game server 100 to be used by the data communication control system of the present invention.

The game server 100 records in program recording means 103 a game program 110 that is an online program of a game such as a poker, dice, slot and roulette, etc. that can be implemented when one's own points are subtracted.

It further comprises game program executing means 121 as a program module that can cause a user terminal 200 to execute the game program 110 recorded in program recording means 103 via communication line 1000 or cause the user terminal 200 to download and execute the recorded game program 100.

Then, the user 20 who operates the user terminal 200 connected with the game server 100 via the communication line 1000 can execute a game by executing the game program 110 recorded in the game server 100 or downloading the game program from the game server 100.

In addition, by downloading the management program 111 to the user terminal 200 and executing it, the program recording means 103 records the management program 111 that causes the user terminal 200 to receive, as data, the code train transmitted from the sponsor server 40, to record the code train, and to transmit the code train recorded earlier from the user terminal 200, when judging whether to execute the game program 110 or continue the game program 110 being executed.

It further comprises management program executing means 122 as a program module that in advance downloads the management program 111 to the user terminal and causes it to execute.

The game server 100 comprises code train judging means 123 as a program module that judges based on predetermined conditions whether the game program 110 can be executed or whether the game program 110 being executed can be continued or not.

The predetermined conditions that the code train judging means 123 uses in judging whether or not to execute the game program 110 or whether to continue the game program 110 being executed are determined based on use history of the code train and data about the available period, wherein the use history of the code train is associated with the identification information of the user terminal 200 for which it is to be judged whether to execute or continue and recorded in the one's own point database 112, and the data about the available period that is associated with the code train transmitted from the user terminal 200 for which it is to be judged whether to execute or continue and recorded in the point database 113.

Then, when the code train judging means 123 judges that the code train conforms to the conditions for authorizing execution or continuation of the game program 110, the program execution or execution authorizing means will be executed. Consequently, the process of extracting points from the point database 113 and adding the user 20's own points is executed so as to authorize the user 20 who plays the game to execute or continue the game.

In other words, the code train judging means 123 is means for determining whether or not to extract points by the process of the program execution or continuation authorizing means 124.

In addition, the program execution or continuation authorizing means 124 also gives authorization when downloading of program or data takes place.

The program execution or continuation authorizing means 124 is a program module that authorizes the user 20 to be provided a game by giving the user 20 his/her own points. The module includes point extracting means for extracting points from the point database 113 based on a code train, and one's own point changing means 1242 for adding the points extracted by the point extracting means 1241 to his/her own points of the corresponding user 20 recorded in the one's own point database 112.

His/her own points being added by the one's own point changing means 1242, the user 20 can execute a new game program 110 or continue the game program 110 being executed.

Depending on a form of the game, the one's own point changing means 1242 may execute a process of subtracting the points extracted by the point extracting means 1241 from the user's own points.

In addition, the game server 100 comprises, as a program module for executing processes for code trains recorded in the point database 113, code train generating means 125 for generating a code train to be recorded in the point database 113, code train and point recording means 126 for associating a code train with points received through the data communication controlling means 105 and records them in the point database 113, and code train issuing means 127 that issues a code train recorded in the point database 113 to the commercial entity 40 such as a sponsor via the data communication controlling 105, for example.

In addition, the game server 100 comprises code train receiving means 128 for receiving a code train transmitted from the user terminal 200 through the communication line 1000.

The game server 100 further comprises attribute information requesting means 129 that is a program module prompting the user 20 to enter such attribute information as his/her address, age, sex, and hobbies, etc., and requesting him/her to transmit the entered attribute information, as a process related to the user 20, attribute information recording means 130 that is a program module recording, in the one's own point database 112, the received attribute information transmitted in response to the request of the attribute information requesting means 129, and privilege granting means 131 that is a program module executing a process of granting privileges such as presentation of items, etc. to the user 20 according to his/her own points recorded in the one's own point database 112.

In the following, processes of various apparatuses used in the data communication control system of the present invention are described.

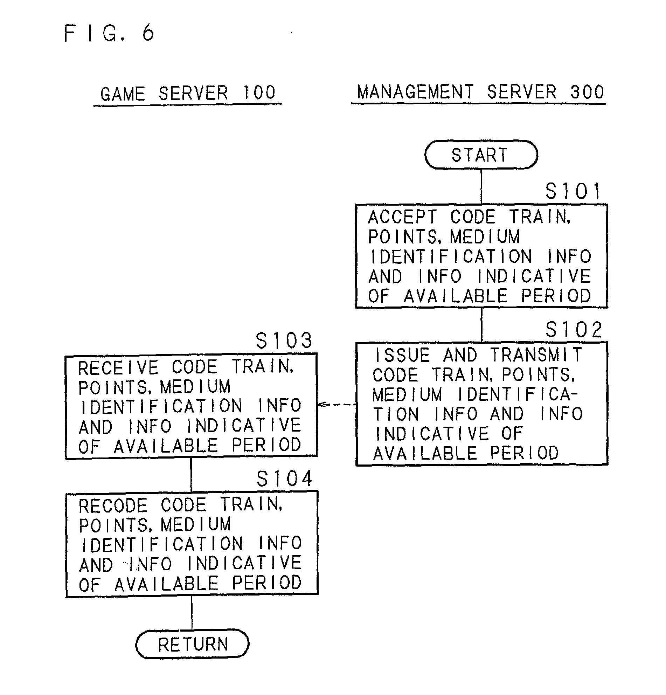

FIG. 6 is a flow chart showing a process of registering a code train of the game server 100 and the management server 300 used in the data communication control system of the present invention.

The service entity 10 updates the point database 113, when the commercial entity 40 such as a sponsor requests the point database 113 to register a new code train.

Then, the operator at the service entity 10 who is responsible for manipulation of the management server 300 associates a code train, points, medium identification information and information indicative of available period used as a keyword, respectively, and enters them in the management server 300.

In the management server 300, based on control of CPU 301, the inputting means 305 accepts input of the code train, points, medium identification information and the information indicative of available period (S101), and issues and outputs the accepted code train, points, medium identification information and information indicative of the available period by means of the code train issuing means 3104, and also transmits it to the game server 100 having the program recording means 103 that records code trains by means of the data communication controlling means 304 (S102).

Based on the control of CPU 101 that executes the computer program 2001 stored in RAM 104, the game server 100 receives the code train, points, medium identification information and information indicative of the available period transmitted from the management server 300 by means of the data communication controlling means 105, receives it as a target of processing of the computer program 2001 by processing of the code train receiving means 128 (S103), and records the received code train, points, medium identification information and information indicative of available period as an associated record in the point database 113 (S104) by the processing of the code train and point recording means 126.

Thus, the record contents of the point database 113 are updated.

In addition, the commercial entity 40 receives the code train issued and outputted from the management server 300 and issues it, as a new code train, to the user 20 through a variety of media such as a Web page, stores, magazines, television and radio broadcasting.

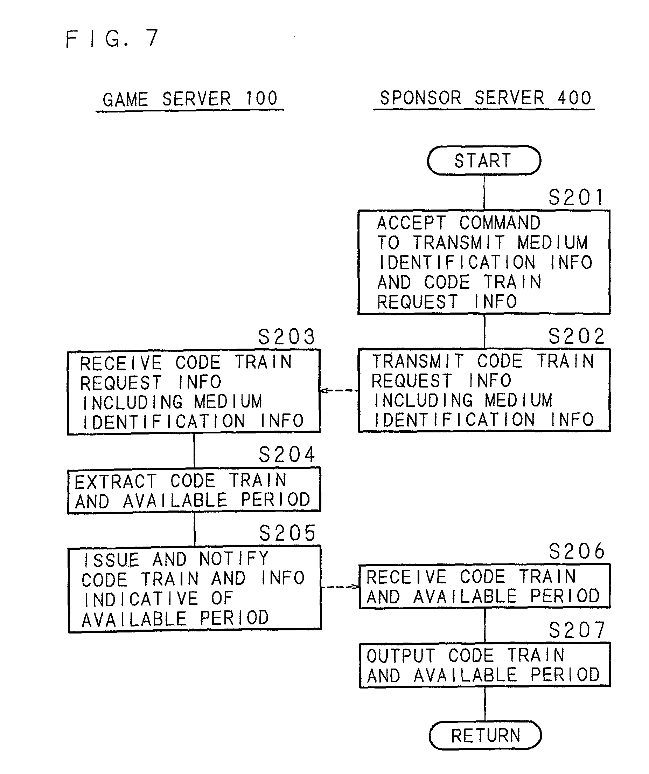

FIG. 7 is a flow chart showing a process of outputting a code train of the game server 100 and the sponsor server 400 to be used in the data communication control system of the present invention.

As described earlier, in the case where the code train issued and outputted by the management server 300 is not transmitted to the commercial entity 40, or where a commercial entity 40 that is different from the commercial entity 40 that made a request for updating to the management server 300 has received the issued code train, the commercial entity 40 engaged in commercial activity such as provision of advertisements and services, and sales of items through various media needs to output a code train to be issued to the user 20 from such outputting means 406 as a monitor or printer, etc. that the sponsor server 400 comprises.

In order to output the code train, a person in charge who operates the sponsor server 400 connects to the game server 100 by operating the sponsor server 400, and transmits code train request information that is a command requesting transmission of a code train to be outputted.

As the operation of transmitting code train request information, the person in charge of the commercial entity 40 inputs into the sponsor server 400 a command to input the medium identification information and to transmit the code train request information.

Input of the medium identification information that identifies a commercial entity 40 can be omitted when it has been registered in advance in the sponsor server 400.

In the sponsor server 400, the inputting means 405 accepts input of the command to transmit the medium identification information and the code train request information (S201), and the data communication controlling means 404 transmits the code train request information including the medium identification information to the game server 100 (S202).

In the game server 100, based on the control of CPU 101 that executes the computer program 2001 stored in RAM 104, the data communication controlling means 105 receives the code train request information including the medium identification information transmitted from the sponsor server 400 (S203), the code train and the information indicative of available period is extracted from the point database 113 by using the medium identification information included in the received code train request information, as a search key (S204), and the code train issuing means 127 issues the extracted the code train and the information indicating the available period to the sponsor server 400, and also notifies the code train and point recording means 126 that is recorded in the program recording means 103 in the game server 100 of the issued code train as internal data (S205).

In this Embodiment, the process of issuing the code train and the information indicating the available period to the sponsor server 400 by means of the code train issuing means 127 in step S205 refers to the process of notifying the commercial entity 400 of the code train and the information indicating the available period, by causing the data communication controlling means 105 connected to the communication line 1000 to transmit the information to the sponsor server 400 by e-mail, etc. However, it may be the process of notifying the commercial entity 40 of an image showing the code train and the available period by issuing it by facsimile communication, and notifying the commercial entity 40 of the document indicating the code train and the available period by issuing it by mail.

In addition, the process of notifying the code train to the code train and point recording means 126 in the game server 100 is the process of having the game server 100 recognize that issuance of the code train is complete, and the code train and point recording means 126 records completion of the issuance in the point database 113, as necessary.

Because of the ability of the game server 100 to recognize that issuance of a code train has completed, when recording in the point database 113 is not needed, the program module that notifies the issued code train may be any program module other than the code train and point recording means 126.

In addition, the configuration may be such that an apparatus that is different from the game server 100 has a function equivalent to the code train issuing means 127. In such a configuration, the apparatus provided with the function corresponding to the code train issuing means 127 issues and outputs to the sponsor server 400 a code train that has been recorded in advance, and also notifies the game server 100 of the issued code train by sending it as data.

Then in the game server 100, by process of the code train and point recording means 126, the notified code train is recorded in the point database 113.

In the sponsor server 400, based on the control of CPU 401, the data communication controlling means 404 receives the code train and the information indicating the available period (S206), and the code train issuing means outputs the received the code train and the information indicating the available period from the outputting means 406 (S207).

Then, the outputted code train is issued to the user 20 through such media as a Web page, stores, magazines, television broadcasting and radio broadcasting, etc.

As a method of issuing a code train to the user 20, the sponsor server 400 may register in advance a mail address of e-mails to be sent/received by the user terminal 200 manipulated by the user 20, so that the code train is automatically transmitted as an e-mail to a destination shown in the registered mail address, namely, the user terminal 200, when the sponsor server 400 receives the code train.

In step S207, although output from the outputting means 406 is represented as display to the outputting means 406 that is a monitor, it may be printing from the outputting means 406 that is a printer.

When the outputting means 406 as the printer prints, it may print only the code train, rather than printing all of the code train and the information indicating the available period. As an alternative form of printing, printing may take place on sheet a form of which has been prepared in advance, such as ad flyers to be placed in a store or to be distributed, and postcards and receipts.

In addition, a code train displayed in the outputting means 406 as a monitor may be recorded and printed on the sheet by a separate task using the sponsor server 400 or any other apparatus. Furthermore, when a code train is issued to the user 20 as a Web page, transmission of the code train to the web server computer that records the code train to be issued may be regarded as output from the sponsor server 400.

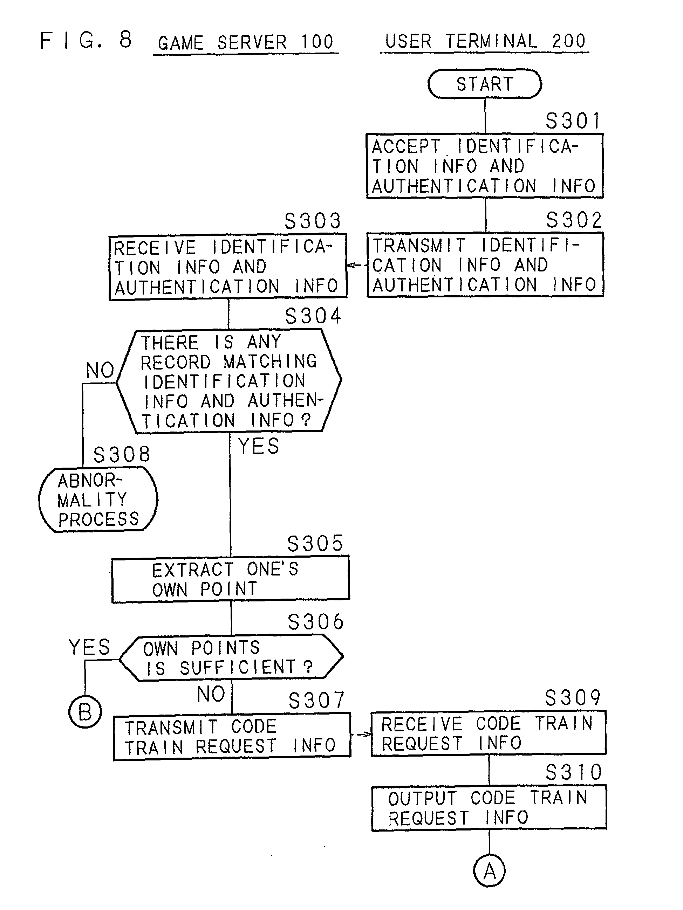

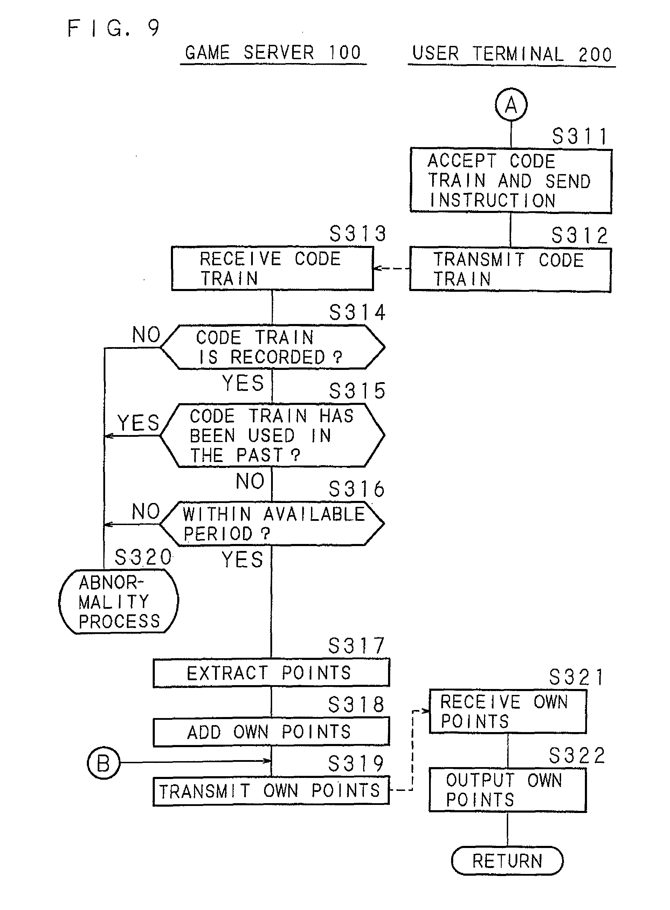

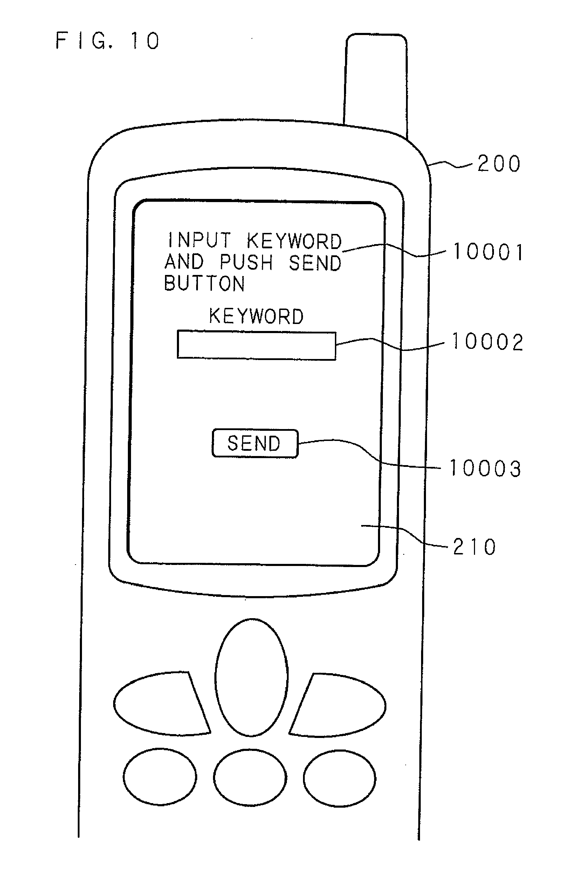

FIG. 8 and FIG. 9 are flow charts showing a process of adding one's own points of the game server 100 and the user terminal 200 to be used in the data communication control system of the present invention. FIG. 10 is an illustration showing code train request information to be outputted from the user terminal 200 and to be used in the data communication control system of the present invention.

The user 20 who has obtained a code train issued from such media as a Web page, stores, magazines, television broadcasting and radio broadcasting, etc., connects to the game server 100 by manipulating the user terminal 200 so as to execute a game to be provided from the game server 100.

The game server 100 requests the user 20 who operates the user terminal 200 to input identification information and authentication information. The user 20 who is requested to input the identification information and authentication information inputs into the user terminal 200 the identification information for identifying himself/herself and the authentication information to be used in authentication.

In the user terminal 200, based on the control of CPU 201, the key inputting means 209 accepts input of the identification information and authentication information (S301), and the data communication controlling means 205 transmits the accepted identification information and authentication information to the game server 100 (S302).

When the identification information is a telephone number of the user terminal 200, the telephone number recorded in ROM 202 is automatically sent as the identification information to the game server 100, even though the user 20 does not input the identification information.

In the game server 100, based on the control of CPU 101 that executes the computer program 2001 stored in RAM 104, the data communication controlling means 105 receives the identification information and authentication information (S303), accesses to the point database 113, and judges whether or not there is any record that matches a combination of the received identification information and authentication information (S304).

In the game server 100, based on the control of CPU 101 that executes the computer program 2001 stored in RAM 104, when it is judged that there is a record matching the combination of the identification information and authentication information (S304: YES), it is considered that authentication has succeeded. Then, his/her own points of the user 20 that is associated with the identification information received from the user terminal 200 and recorded in the one's own point database 112 is extracted (S305), and it is judged whether a value of his/her own points that was extracted is sufficient or not (S306).

In the game server 100, based on the control of CPU 101 that executes the computer program 2001 stored in RAM 104, when it is judged in step S306 that the points are not sufficient (S306: NO), the data communication controlling means 105 transmits to the user terminal 200 code train request information requesting transmission of a code train (S307).

In addition, in the game server 100, when it is judged in step S304 that there is no record that matches a combination of the received identification information and authentication information (S304: NO), it is considered that authentication has failed. Then, abnormality process notifying that execution of the game will be prohibited is executed (S308).

In the user terminal 200, based on the control of CPU 201, the data communication controlling means 205 receives the code train request information (S309), and outputs the received code train request information from the displaying means 210 (S310).

Now, the code train request information to be outputted from the user terminal 200 is described.

FIG. 10 illustrates the displaying means 210 as a part of the user terminal 200, with the code train request information shown on the displaying means 210.

The code train request information is outputted as a Web page described in the markup language such as compact HTML.

In the upper part of the displaying means 210, the expression 10001 prompting entry of the code train as a keyword appears. Near the center, a code input column 10002 is displayed. Down below the input column, the image 10003 shown as "SEND" where a command to transmit the code train is inputted appears.

The user 20 checks the code train request information, inputs in the input column 10002 the code train issued through such media as a Web page, stores, magazines, television broadcasting and radio broadcasting, and inputs a send instruction that instructs the image 10003 as shown as "SEND".

To input the code train in step S311, the user may type characters of the code train one by one. However, when he/she has obtained the code train from a Web page, he/she may input by storing the code train outputted as a Web page from the displaying means 210 in RAM 203, and entering the code train stored in RAM 203 by copying it in the input column 10002 with so-called copy-and-paste operation.

In FIG. 9, in the user terminal 200, based on the control of CPU 201, the key inputting means 209 accepts input of the code train and the send instruction (S311), and the data communication controlling means 205 transmits the accepted code train to the game server 100 (S312).

Alternatively, a computer program whereby input of a code train into the user terminal 200 establishes an automatic connection to the game server 100, and the code train is automatically transmitted may be written in such programming language as JAVA and run on the user terminal 200.

In the game server 100, based on the control of CPU 101 that executes the computer program 2001 stored in RAM 104, the data communication controlling means 105 receives the code train transmitted from the user terminal 200, and then the code train receiving means 128 receives it as a target of processing by the computer program 2001 (S313). Then, the code train judging means 123 judges, as a given condition determined in advance, whether or not the points associated with the received code train are recorded in the point database 113 (S314).

Then, in the game server 100, when the code train judging means 123 judges, based on the control of CPU 101 that executes the computer program 2001 stored in RAM 104, that the points associated with the code train are recorded in the point database 113 (S314: YES), as a given condition predetermined in advance, it is judged, based on the history that is associated with the identification information received earlier and recorded in the one's own point database 112, whether the earlier received code train has been used in the past (S315).

The judgment based on the history in step S315 is made by determining whether or not the earlier received code train is recorded in the history information recorded in the one's own point database 112.

The judgment on whether or not to extract points based on the history in this manner can prohibit the code train use of which has been recorded in the history from extracting points, thus preventing users from illegally changing their own points by transmitting a same code train many times.

In addition, in the game server 100, based on the control of CPU 101 that executes the computer program 2001 stored in RAM 104, when it is judged that the earlier received code train has not been used before (S315: NO), as a given condition determined in advance, it is judged based on the available period associated with the code train recorded in the point database 113, whether or not a current date is within the available period (S316).

Then, in the game server 100, based on the control of CPU 101 that executes the computer program 2001 stored in RAM 104, when it is judged that the current date is within the available period (S316: YES), it is considered that the code train received from the user terminal 200 conforms with a given condition determined based on the conditions for the history and the available period. Then, the point extracting means 1241 included in the program execution or continuation authorizing means 124 extracts points corresponding to the received code train from the point database 112 (S317), the one's own point changing means 1242 included in the program execution or continuation authorizing means 124 adds the extracted points to the one's own points associated from the identification information received from the user terminal 200 (S318), and the data communication controlling means 105 transmits the information indicating one's own points to the user terminal 200 (S319).

The code train then used in extraction of the points is recorded as history information in the one's own point database 112, and subsequently, addition of points to one's own points by using that code train can no longer be allowed.

As described above, in steps S314 to S316, based on the code train received from the user terminal 200, and the user history and the available period of the code train, the code train judging means 123 judges whether or not the received code train conforms with a given condition determined in advance. When it conforms with the given condition, it then judges whether or not the point extracting means 1241 extracts points, which corresponds to authorization to execute the game program 110 or execution of the game program 110 being executed.

Then, in steps S317 to S318, the point extracting means 1241 extracts points corresponding to the received code train, and the one's own point changing means 1242 changes the points by adding the extracted points to the one's own points associated with the identification information received from the user terminal 200.

When his/her own points are added, the user 20 can execute the game program 110 or continue the game program 110 being executed of the game that can be executed when one's own points are subtracted.

In addition, the process of adding the points to be executed in step S318 by the one's own point changing means 1242 may be the process of subtracting points, depending on content of a game to be provided.

Thus, the game server 100 judges, by the code train judging means 123, whether or not the code train received from the user terminal 200 conforms with the predetermined conditions such as the code train, the history, the available period. Based on the judgment result, it decides whether or not to extract points, and authorizes provision of a game by changing his/her own points of the user 20.

When it is judged that the points associated with the code train in step S314 are not recorded in the point database 13 (S314: NO), then the abnormality process for notifying the user terminal 200 that the code train is invalid takes place (S320).

In addition, when it is judged in step S315 that the code train has been used before (S315: YES) or in step S316 that a current date is out of the available period (S316: NO), it is considered that extraction of the points is prohibited in the code train received from the user terminal 200, and then the predetermined abnormality process for notifying the user terminal 200 that the code train is invalid takes place (S320).

When it is judged in step S306 that his/her own points of the user 20 are sufficient enough to play the game (S306: YES), the process proceeds to step S319 where the data communication controlling means 105 transmits information indicative of his/her own points to the user terminal 200 (S319).

Thus, while limits are placed on the number of times of and length of use of a code train, as demonstrated by means of FIG. 6, since the point database 113 is updated, as needed, as the process of registering a code train, the user 20 is supposed to continuously carry out the operations not only once but several times, such as accessing to a Web page, using shops, purchasing magazines, watching television broadcasting and radio broadcasting.

In the user terminal 200, based on the control of CPU 201, the data communication controlling means 205 receives the information indicative of one's own points transmitted from the game server 100 (S321), and outputs the received information indicative of the one's own points from the displaying means 210, as an initial screen of the game (S322).

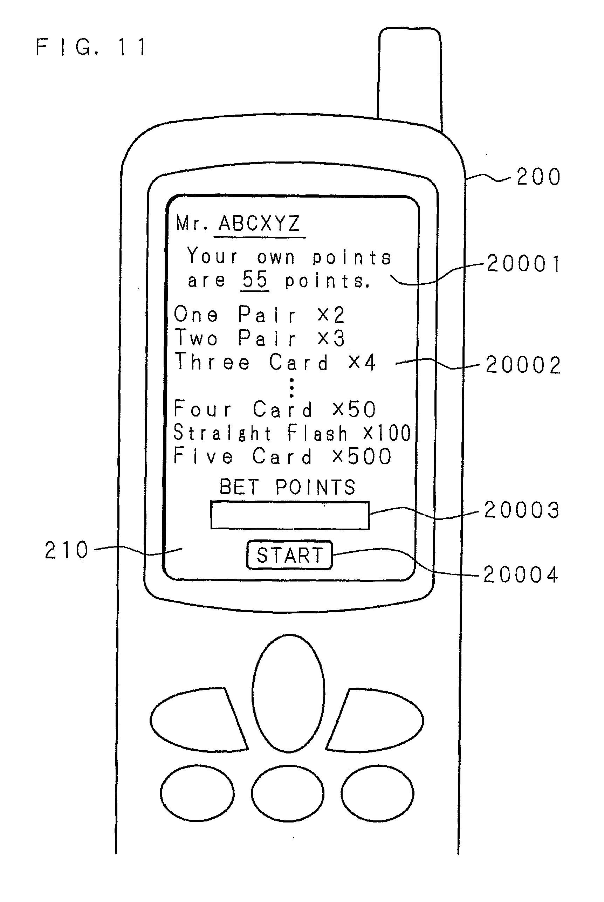

FIG. 11 is an illustration showing the initial screen of the game to be outputted from the user terminal 200 used in the data communication control system of the present invention.

FIG. 11 shows the displaying means 210 as a part of the user terminal 200. The initial screen of the game is displayed on the displaying means 210.

Information showing the user's own points 20001 appears in the top of the initial screen of the game, and information 20002 showing odds of a poker, the game, appears in the central part. Then, in the bottom, the bet point input column 20003 and the image 2004 shown as "START" where the user enters a command to start the game are shown.

The user 20 checks the information showing his/her own points 20001 and showing the odds 20002, and starts the game by entering bet points in the bet point input column 20003, and entering the instruction of the image 20004 showing "START".

Although the points entered as bet points are subtracted from the user's own points as he/she plays the game, they may be added as a dividend depending on result of the game.

For instance, in the example as shown in FIG. 11, out of 55 points that he/she has, the user enters 20 points as bet points, and starts the game. Then, although his/her own points are reduced to 35 points, he/she can earn 40 points, double the 20 points, when he/she wins the game with a poker hand of "one pair", and then his/her own points will be 75 points.

Although the example of FIG. 11 shows the embodiment wherein the user plays poker as a game, it may be any game such as a dice, slot, and roulette, if it is played by changing a one's own points.

In addition, when the invention is applied to different types of games such as a role playing game and action game, the game server 100 may provide a game by determining the game playing time or the number of times the game can be played, rather than giving points according to code trains received from the user terminal 200.

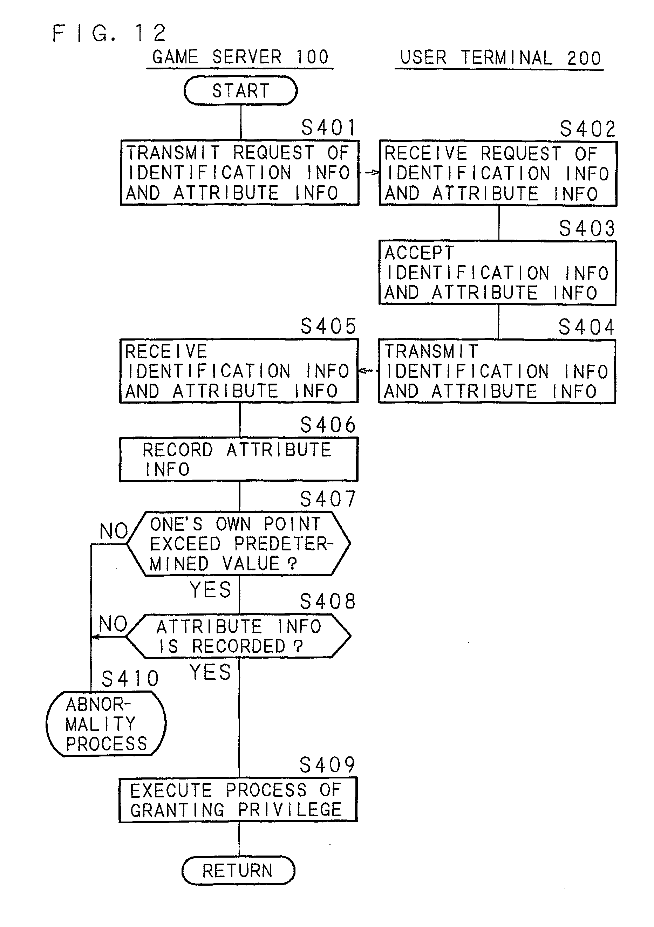

FIG. 12 is a flow chart showing the process of granting privileges of the game server 100 and the user terminal 200 to be used in the data communication control system of the present invention.

The service entity 10 grants privileges such as presentation of items to the user 20 who satisfies predetermined numerical conditions such as his/her own points exceeding a predetermined value by playing the game and/or sending the code train.

The user 20 whose own points exceed the predetermined value operates the user terminal 200 and connects to the game server 100 so as to receive a privilege.

In the game server 100, based on the control of CPU 110 that executes the computer program 2001 stored in RAM 104, the attribute information requesting means 129 transmits to the user terminal 200 the request for identification information and attribute information that requests input of the identification information and the attribute information showing attributes of the user 20 identified by the identification information (S401).

The user terminal 200, based on the control of CPU 201, receives the request for identification information and attribute information (S402), and outputs the received request for identification information and attribute information.

The user 20 who is requested to input the identification information and attribute information inputs the identification information and the attribute information into the user terminal 200.

The attribute information showing attributes of the user 20 is the information recorded in the one's own point database 112 and showing an address, age, sex and hobbies.

In addition, when there is more than one privilege that can be granted to the user 20, the game server 100 also requests the user to input a selection of a desired privilege.

In the user terminal 200, based on the control of CPU 201, the key inputting means 209 accepts input of the identification information and attribute information (S403), and the data communication controlling means 205 transmits the accepted identification information and attribute information to the game server 100 (S404).

In the game server 100, based on the control of CPU 101 that executes the computer program 2001 stored in RAM 104, the data communication controlling means 105 receives the identification information and attribute information transmitted from the user terminal 200 (S405), and the attribute information recording means 130 associates the received attribute information with the identification information and records them in the one's own point database 112 (S406).

Then, in the game server 100, based on the control of CPU 101 that executes the computer program 2001 stored in RAM 104, it is judged whether the one's own points that are associated with the identification information received from the user terminal 200 and recorded in the one's own point database 112 exceed the predetermined value set as a standard for giving privileges (S407).

In the game server 100, based on the control of CPU 101 that executes the computer program 2001 stored in RAM 104, when it is judged that the one's own points exceed the predetermined value set as the standard for giving privileges (S407: YES), it is judged whether or not the attribute information is associated with the identification information received in step S405 and recorded (S408). When it is judged that the attribute information is recorded (S408: YES), the privilege granting means 131 executes the process of granting a privilege to the user 20 identified by the identification information (S409).

In addition, when the game is configured such that execution of the game adds to one's own points, the privilege granting means 131 executes the process of granting a privilege, in the case where the one's own points are less than the predetermined value.

When it is judged in step S407 that the one's own points are less than the predetermined values set as a standard for granting privileges (S407: NO), or in step S408 that there is no attribute information associated with the identification information and recorded (S408: NO), the predetermined abnormality process notifying the user terminal 200 that the condition for granting privileges is not satisfied is executed (S410).

Although this shows the embodiment wherein the attribute information is transmitted from the user terminal 200 to the game server 100 when a privilege is granted, the embodiment may also be executed when identification information and attribute information are registered, which takes place the first time the user utilizes the service.

In such a case, since the process of recording the attribute information, as shown in step S406, is omitted in the process of granting privileges, the judgment in step S408 carries more weight in order to check for any leakage of the attribute information.

In addition, the process of granting a privilege by the privilege granting means 131 as shown in step S409 is various types of processes that provide benefits to the user 20, such as the process arranging a privilege to be given in exchange of one's own points or the process of entitling the user 20 whose own points exceed the predetermined value to apply for presentation of items.

Thus, execution of various processing that provides benefits to the users 20 whose own points satisfy the predetermined numerical conditions, thus motivating the users 20 to participate in the game, which could encourage them to participate.

In addition, for the user 20 to obtain a privilege, the process of registering attribute information as shown in step S406 is needed, wherein the user inputs attribute information showing address, age, sex and hobbies, etc. into the user terminal 200, and transmits it from the user terminal 200 to the game server, and the attribute information recording means 130 records the attribute information.

As this encourages the user 20 to actively register his/her attributes, it becomes possible to easily keep track of the attributes of the user 20.

### Embodiment 2.

Embodiment 2 is a configuration that different code trains are automatically generated and issued to individual users 20 in Embodiment 1.

Since the corporate structure and configuration of respective apparatuses in Embodiment 2 are similar to those in Embodiment 1, referring to Embodiment 1, and skipping their descriptions.

However, the point database 113 is partly different from that of Embodiment 1, which will now be described below.

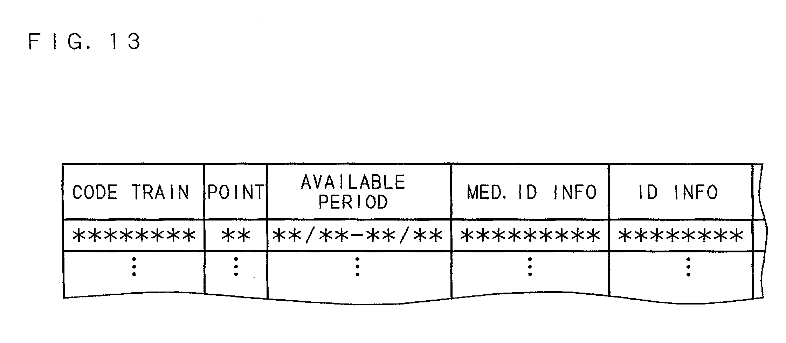

FIG. 13 is an illustration conceptually showing record contents of the point database 113 the game server 100 of this present invention comprises.

The point database 113 records various items, as a record, such as the points, the available period, the medium identification information and the identification information associated with code trains to be used as a keyword.

As the code train, the points, the available period and the medium identification information are similar to those in Embodiment 1, referring to Embodiment 1 and omitting their descriptions.

In Embodiment 2, as different code trains are issued to individual users 20, the point database 113 also sets a record for every user 20. In order to identify a user 20 corresponding to a set record, identification information for identifying the user 20 is set as a record item.

A code train to be issued to individual users 20 can be easily applied to a configuration in which the code train is issued only to users 20 who have registered himself/herself as a member of the commercial entity 40 in advance, which thus enables establishment of a system to treat members favorably.

For example, points based on code trains to be issued to individual users 20 being set higher than points based on code trains to be issued to all users 20, the members who can obtain a code train to be issued to individual users 20 can easily vary his/her own points.

In the following, processes of various apparatuses to be used in the data communication control system of this present invention are described.

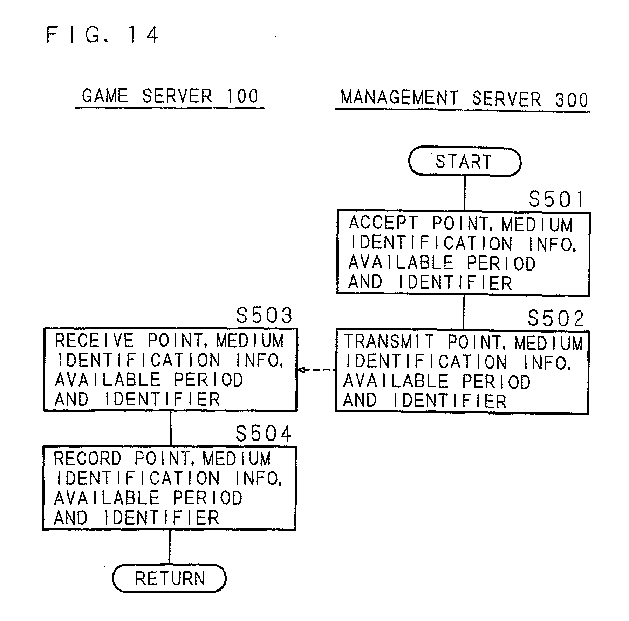

FIG. 14 is a flow chart showing the process of registering an identifier of the game server 100 and the management server 300 to be used in the data communication control system of the present invention.

In the service entity 10, when receiving request for different code trains to be issued to individual users 20 from, for instance, a commercial entity 40, a person in charge of manipulation of the management server 300 associates respective information showing points, medium identification information, a available period and identifier and input them into the management server 300.

The identifier is information to be used as a record ID for identifying the associated and recorded points, medium identification information and available period. It is used for identifying the points, medium identification information and available period to be associated with a code train and recorded in the point database 113, when a code train is generated based on the identification information, as discussed later.

In the management server 300, based on the control of CPU 301, the inputting means 305 accepts input of the information indicating the points, medium identification information, available period and identifier (S501), and the data communication controlling means 304 transmits the accepted information indicating the points, medium identification information, available period and identifier to the game server 100 (S502).

In the game server 100, based on the control of CPU 101 that executes the computer program 2001 stored in RAM 104, the data communication controlling means 105 receives the identification information indicating the points, medium identification information, available period and identifier from the management server 300 (S503), and associates and records the points, medium identification information, available period and identifier (S504).

A record that is take in step S504 may be added as a new record to the point database 13. Alternatively, a dedicated database may be set with which the information indicating the points, medium identification information, available period and identifier is associated and recorded.

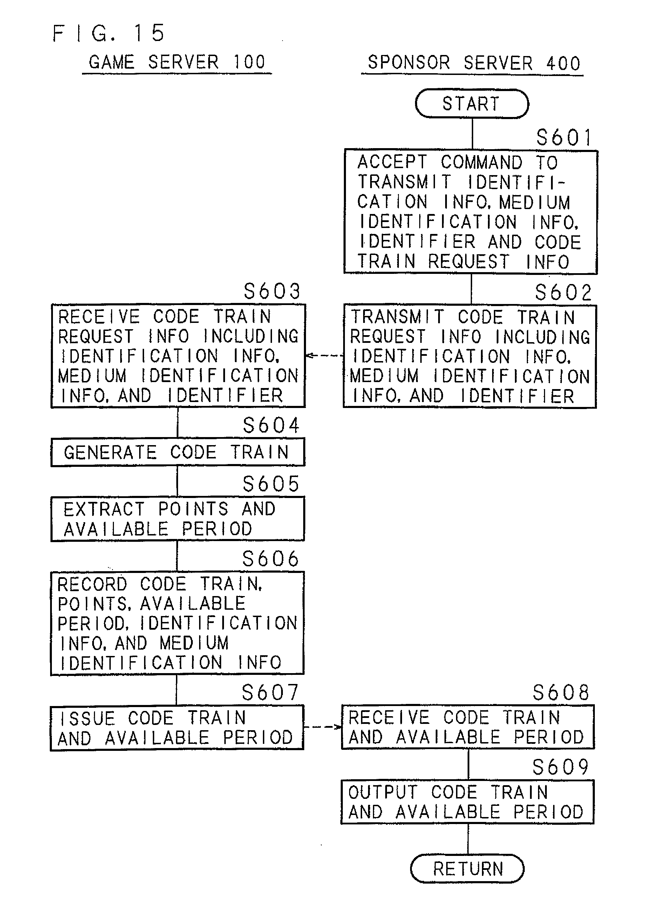

FIG. 15 is a flow chart showing the process of outputting a code train of the game server 100 and the sponsor server 400 to be used in the data communication controlling means of the present invention.

For instance, in the commercial entity 40 using such a medium as establishments like a store, etc., a form of operation is possible that, as service for purchase of items, a code train is issued to each of the users 20 who visit a shop during a sales promotion period or who have registered as a member of the commercial entity 40.

Under these circumstances, as an operation of transmitting the code train request information for requesting a code train to be issued for every user 20, a responsible person of the commercial entity 40 inputs into the sponsor server 400 the identification information, the medium identification information and the identifier, as well as a command to transmit the code train request information.

In addition, input of the medium identification information for identifying the commercial entity 40 can be omitted when it is registered in advance in the sponsor server 400. In the case where the identifier is used as an identifier for identifying services, input of the identifier can also be omitted when it is registered in advance.

The identification information may be transmitted to the sponsor server 400 and inputted therein, by connecting the user terminal 200 possessed by the user 20 with the sponsor server 400 installed in the store of the commercial entity 40 wirelessly such as infrared or wiredly, transmitting communicatively the identification information such as a telephone number recorded in the user terminal 200 to the sponsor server 400, and inputting it therein, rather than manually inputting the identification information into the sponsor server 400.

In the sponsor server 400, based on the control of CPU 401, the inputting means 405 accepts input of a command to transmit the identification information, the medium identification information and the identifier, as well as the code train request information (S601), and the data communication controlling means 404 transmits the code train request information including the identification information, the medium identification information, and the identifier to the game server 100 (S602).

In the game server 100, based on the control of CPU 101 that executes the computer program 2001 stored in RAM 104, the data communication controlling means 105 receives the code train request information that is transmitted from the sponsor server 400 and includes the identification information, the medium identification information, and the identifier (S603), and the code train generating means 125 generates a code train by transforming the identification information included in the received code train request information by means of a predetermined transform function (S604).

Then, in the game server 100, based on the control of CPU 101 that executes the computer program 2001 stored in RAM 104, the information indicating the points and the available period registered by the identifier registration process is extracted (S605), the generated code train, the information indicative of the extracted points and the available period, the identification information included in the code train request information, and the medium identification information are recorded in the point database 113 (S606), and the code train issuing means 125 issues the code train and the information indicative of the available period to the sponsor server 400 by means of the data communication controlling means 105 (S607).

In the sponsor server 400, based on the control of CPU 401, the data communication controlling means 404 accepts the code train and the information indicative of the available period (S608), and the code train issuing means 410 outputs the received code train and the information indicating the available period from the outputting means 406 (S609).

Then, the output code train is issued to the user 20.

In addition, the mode of issuing a code train to every user 20 by transmitting the identification information is not limited to issuance at stores. For instance, when the sponsor server 400 is a web server computer and a Web page is a medium, the invention is applicable to the mode in which the code train is issued as a Web page when the identification information inputted in the predetermined Web page is transmitted.

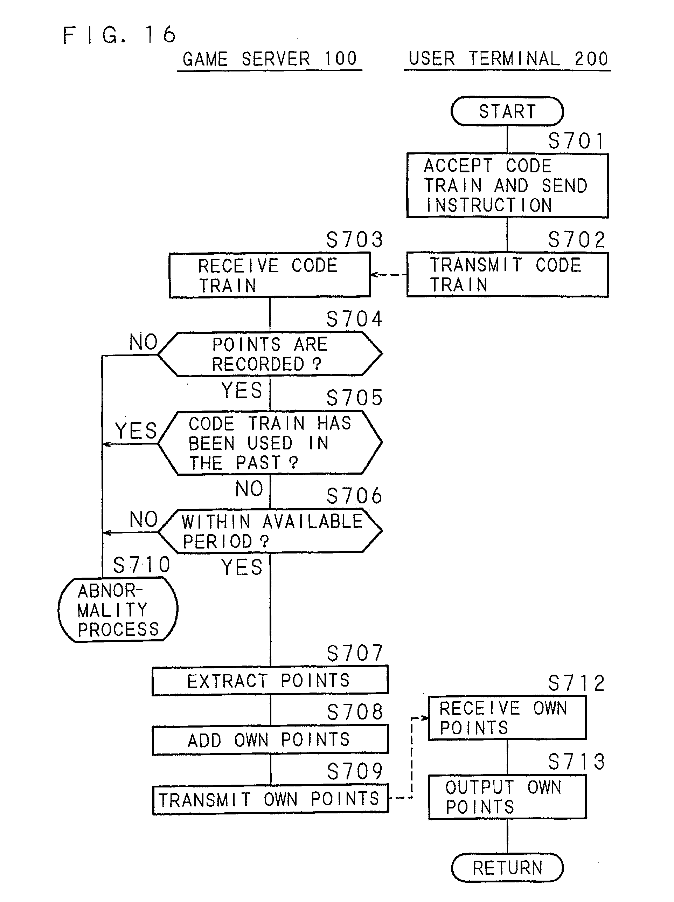

FIG. 16 is a flow chart showing the process of adding one's own points of the game server 100 and the user terminal 200 to be used in the data communication control system of the present invention.

The user 20 who has obtained the code train issued by the code train output process illustrated in FIG. 15 accesses to the Web page for playing the game to be provided by the game server 100, by operating the user terminal 200 and connecting to the game server 100.

Then, the process similar to the one corresponding to steps S301 to S310 in the process of adding one's own points illustrated in FIG. 8, specifically, the process of transmitting identification information and authentication information from the user terminal 200 to the game server 100 and authenticating at the game server 100, and the process of outputting the code train request information requesting input of the code train take place.

Moreover, the user 20 inputs the code train into the user terminal 200 and executes input instructing transmission of the code train.

In the user terminal 200, based on the control of CPU 201, the key inputting means 209 accepts input of the code train and send instruction (S701), the data communication controlling means 205 transmits the accepted code train to the game server 100 (S702).

In the game server 100, based on the control of CPU 101 that executes the computer program 2001 stored in RAM 104, the data communication controlling means 105 receives the code train transmitted from the user terminal 200, the code train receiving means 128 receives the code train as a target of the process of the computer program 2001 (S703), and the code train judging unit 123 judges whether or not the points associated with the received code train and the identification information received during the authentication process are recorded in the point database 113 (S704).

Then, in the game server 100, based on the control of CPU 101 that executes the computer program 2001 stored in RAM 104, when it is judged that the points associated with the code train and the identification information are recorded in the point database 113 (S704: YES), the code train judging means 123 judges, based on the history associated with that identification information and recorded in the one's own data point database 112, whether or not the code train has been used before (S705).

The judgment based on the history of step S705 is made by judging whether or not the code train is recorded in the history information recorded in the one's own point database 112.

In addition, in the game server 100, based on the control of CPU 101 that executes the computer program 2001 stored in RAM 104, when it is judged that the code train has not been used before (S705: NO), the code train judging means 123 then judges whether or not a current date is within the available period, based on the available period associated with the code train recorded in the point database 113 (S706).

Then, in the game server 100, based on the control of CPU 101 that executes the computer program 2001 stored in RAM 104, when it is judged that the current date is within the available period (S706: YES), it is considered that the code train received from the user terminal 200 satisfy the conditions for the identification information, those for the history, and those for the available period. Then, the point extracting means 1221 included in the game provision authorizing means 122 extracts points corresponding to the received code train from the point database 113 (S707), the one's own point changing means 1242 included in the program execution or continuation authorizing means 1242 adds the extracted points to the one's own points associated with the identification information received from the user terminal 200 (S708), and the data communication controlling means 105 transmits the information indicative of one's own points to the user terminal 200 (S709).

The code train then used for extracting the points is recorded as the history information in the point database 112, and subsequently, addition of points to one's own points by using that code train can no longer be allowed.

As described above, in steps S704 to S706, based on the identification information, the use history of the code train, and the available period of the code train, the code train judging means 123 judges whether the received code train conforms with the condition for authorizing the provision of the game, and based on the judgment result, decides whether the point extracting means 1241 can extract points, which corresponds to a permission to execute the game program 110 or continue the game program 110 being executed.

In addition in steps S707 and S708, the program execution or continuation authorizing means 124 extracts the points corresponding to the code train received by the point extracting means 1241 as the process to allow execution of the game program 110 or continuation of the game program 110 being executed, and adds the points extracted by the one's own point changing means 1242 to the one's own points associated with the identification information received from the user terminal 200.

His/her own points being added, the user 20 can now execute the game program 110 or continue the game program 110 being executed of the game that becomes feasible when his/her own points are subtracted.

Thus, in the game server 100, the code train judging means 123 judges whether the code train received from the user terminal 200 conforms with predetermined conditions such as the identification information, the history, and the available period, and based on the judgment result, determines whether the points can be extracted or not, and authorizes provision of the game by the program execution or continuation authorizing means 124 granting his/her own points to the user 20.

In addition, when it is judged in step S704 that the points associated with the code train is not recorded in the point database 113 (S704: NO), predetermined abnormality process for notifying the user terminal 200 that the code train is invalid takes place (S710).

It is also judged in step S705 that the code train has been used before (S705: YES) or in step 706 that a current date is out of the available period (S706: NO), it is considered that the point extraction is prohibited in the code train received from the user terminal. Then, the predetermined abnormality process for notifying the user terminal 200 that the code train is invalid takes place (S710).

In the user terminal 200, based on the control of CPU 201, the data communication controlling means 205 receives the information indicative of one's own points transmitted from the game server 100 (S712), and outputs the received information indicative of the one's own points from the displaying means 210 (S713).

### Embodiment 3.

Embodiment 3 is a configuration wherein the user terminal 200 that received the code train transmitted from the sponsor server 400 in Embodiment 1 automatically transmits the code train to the user terminal 200 by the process of the management program 111 that has been downloaded in advance from the game server 100.

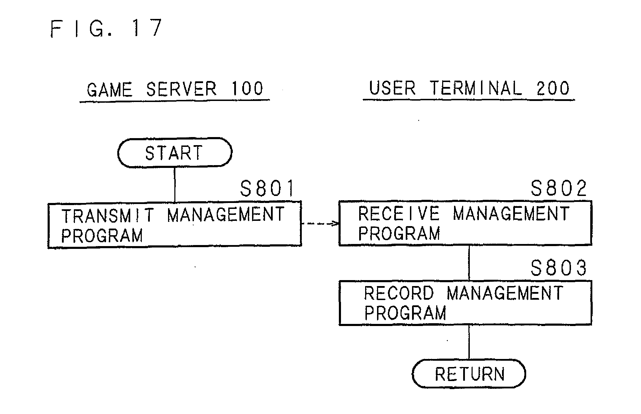

FIG. 17 is a flow chart showing the process of downloading the management program of the game server 100 and the user terminal 200 to be used in the data communication control system of the present invention.

When accepting the command requesting downloading of the management program 111 from the user terminal 200, the game server 100, based on the control of CPU 101 that executes the computer program 2001 stored in RAM 104, transmits the recorded management program 111 to the user terminal 200 (S801).

The user terminal 200, based on the control of CPU 201, receives the management program 111 (S801), and records the received management program 111 in RAM 203 (S802).

Then, by executing the management program 111 that was downloaded from the game server 100 and recorded in RAM 203, the user terminal 200 executes the process of transmitting to the game server 100 the code train received from the sponsor server 400.

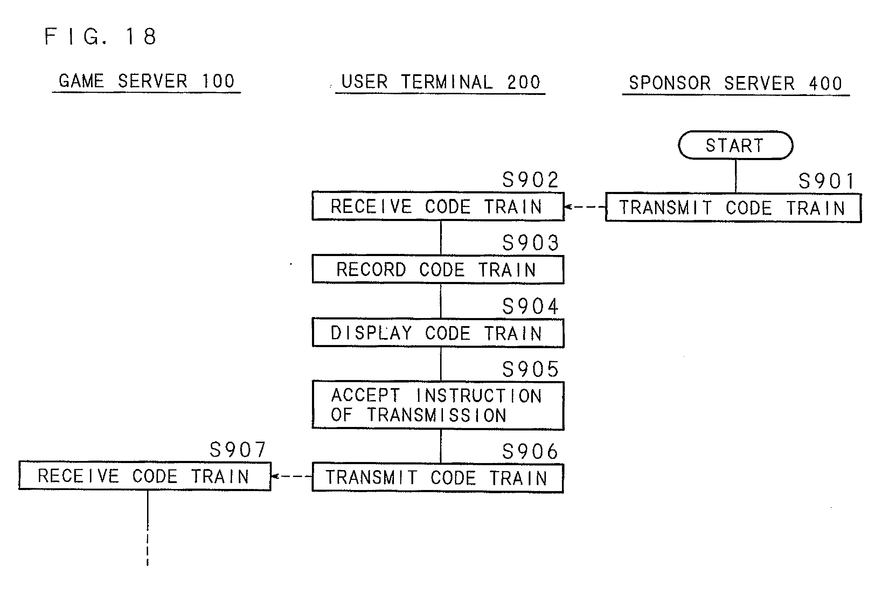

FIG. 18 is a flow chart showing the process of transmitting and receiving a code train of the game server 100, the user terminal 200, and the sponsor server 400 to be used in the data communication control system of the present invention.

As the process of issuing a code train to the user terminal 200 that has been registered in advance, the sponsor server 400, for instance, transmits a code train newly issued from the game server 100, as data, to the user terminal 200 by means of the code train issuing means 410 to be executed based on the control of CPU 401 (S901).

In the user terminal 200, the management program 111 executed based on the control of CPU 201 receives the code train as data (S902), records the received code train in the RAM 104 (S903), and displays it on the displaying means 210 when judging whether to execute the game program 110 or continue the game program 110 being executed (S904).

In addition, when judgment of execution or continuation can be set depending on his/her use condition, such as when accessing to the game server 100 and the one's own points recorded in the one's own point database 112 satisfy a predetermined condition, when the available period of the code train is close to date, and when receiving, etc.

The user 20 checks the code train displayed on the displaying means 210 and inputs an instruction to transmit the code train.

In the user terminal 200, the management program 111 to be executed based on the control of CPU 201 accepts input for instructing transmission of the code train (S905), and transmits a code train recorded in the RAM 104 to the game server 100 (S906).

In addition, the input for instructing transmission of the code train is input for ensuring that the code train be transmitted, and the user terminal 200 may be arranged to transmit the code train even without accepting the input when predetermined time has elapsed since displaying.

The game server 100, based on the control of CPU 101, receives the code train transmitted from the user terminal 200 (S907).

In addition, since subsequent processes are similar to those after step S314 described with FIG. 9, referring to Embodiment 1 for details and omitting their descriptions.

Execution of the management program 111 at the user terminal 200 thus results in automatic processes such as acquisition and input of issued code trains, which could improve convenience and facilitate utilization of the data communication control system of the present invention.

Although in the above Embodiments 1, 2 and 3, the configuration in which the user 20 plays the game by changing his/her own points is described, the present invention is not limited to the configuration, and could be applied to any embodiment of a method of providing any other services than implementation of the game. In a communication system to which such a service providing method is applied, service to be provided by changing one's own points, for instance, could be services such as downloading of music information that serves as a ringtone of a mobile phone.

Furthermore, although the game server 100 and the management server 300 to be managed at the service entity 10 are shown as being distinct in the Embodiment 1 described above, the present invention should not be limited to this. For instance, one apparatus may be arranged to have functions of the game server 100 and the management server 300. Furthermore, with any apparatus other than the game server 100 provided with functions of the code train issuing means 130, the respective functions may be distributed to more than 2 apparatuses.

In addition, the user terminal 200 is not limited to a mobile phone, and may be any portable apparatus such as PDA (Personal Digital Assistants). Furthermore, when a code train is issued as a Web page, it may be a personal computer.

Although in the above Embodiments 1, 2 and 3, the configuration whereby the user's own points are added depending on points based on a code train when he/she does not have sufficient points to play a game is described, the present invention is not limited to this. It may be arranged such that his/her points are added while the user does not play a game or when he/she has sufficient points.

The present invention is characterized in that the system is arranged to enable execution of a program or continuation of a program being executed, by obtaining a code train (e.g., a password) from a sponsor (server), etc., that is distinct from a game server, etc. and using the code train, rather than giving and receiving a code train, for instance, between a game server that simply executes a program and a user terminal that uses a program, for the purpose of starting a game or continuing a game from stored condition. For example, when a computer, etc. that is the same as code train issuing means comprises means for executing a program, etc., a path (the other side) that issues/transmits a code train is different from a path (the other side) that receives it.

This could improve general versatility for handling the code train and enable commercial transactions that use the code train and commercial transactions that use the code train as added value.

In addition, the configuration described above is such that it is judged whether or not the received code train conforms with predetermined conditions corresponding with the code train issued/outputted by the code train issuing means or the transmitted code train. However, the configuration may be such that, for example, a sponsor itself generates/issues a code train in accordance with a predetermined rule, thus it being judged whether or not the rule is followed.

In such a case, the rule for generating/issuing a code train may be changed for every sponsor, or in accordance with a price, for example, in the case where a code train is issued when an item sold by the sponsor is purchased.

In particular, adoption of the configuration in which the user terminal is caused to receive and store a code train, and to transmit the stored code train for matching could clear the problem of code train length and further improve versatility thereof.

### INDUSTRIAL APPLICABILITY

As described above in details, according to the firsts to third inventions, a code train issuing means issues a code train to be used as a keyword, etc. to, for example, a sponsor, who is a provider of items, etc., and the sponsor issues the code train to a user, a target of items, etc. to be provided, who is prospective customer through a variety of media such as the Internet, various stores, magazines and television broadcasting and radio broadcasting. Obtaining the issued code train, the user, who is a target of items, etc. to be provided, transmits the code train from a user terminal such as a mobile phone to code train receiving means that receives the code train, through a communication line such as the Internet. The code train receiving means receives the transmitted code train, and code train judging means judges whether or not the received code train conforms with predetermined conditions corresponding to the code train issued by the code train issuing means. Then, when so, authorizing means authorizes the user terminal that transmitted the code train to execute or continue a program and downloading of a program and/or data.

With such a configuration, for the purpose of executing a program such as a game program or continue a program being executed, or downloading data whose content is music, etc., or data such as an electronic book, a target of items, etc. to be provided, actively acts toward various media in order to obtain a code train; in other words, he/she accesses to a Web page where advertisements containing a code train are displayed, uses a store, purchases a magazine, and watches television broadcasting or listens to radio broadcasting. Consequently, the target of an item, etc., to be provided will preferentially use stores where he/she can obtain a code train, for instance, or pay close attention to advertisement that shows a code train of a magazine that he/she has bought.

Thus, compared with information unilaterally transmitted to a target of items, etc. to be provided, this could enhance the advertising effects, and provide advantages of effectively implementing the sales promotion or the activity for getting customers, such as advertisements.

This could also enable the target of items, etc. to be provided to execute a target program cheaply, thus providing advantages of expanding the profit together with the provider of items.

Yet, as judging whether or not the received code train conforms with the predetermined condition, e.g., whether the received code train is same as the code train issued by the sponsor, can also provide a judgment of validity of the code train, thus providing advantages of preventing a user who transmits an illegal code train from executing a program or continuing a program being executed, etc.

Furthermore, execution of the management program written in such programming language as JAVA, etc. that receives and records the code train transmitted from the sponsor server and transmits the recorded code train when it is judged whether to execute a program or continue a program being executed results in automatic processes such as acquisition and input of the issued code train, etc. This provides advantages of improving convenience and facilitating utilization of the data communication control system of the present invention.

In addition, use of a mobile phone or a portable computer such as PDA (Personal Digital Assistants) as a user terminal enables a user to move while carrying a user terminal. Thus, he/she can easily obtain a code train to be issued from a medium of stores, etc. that he/she should otherwise actively visit, and transmit it to the game server. This could provide advantages of adding convenience of users of user terminals, and enhancing the ability to pull in more customers in a location where movement of users is necessary.

According to the fourth invention, as a program that, as points associated with the user vary, starts or continues execution depending on points, a game program such as a poker game or roulette etc. that reduces a user's own points, which are points associated with a user, as the game progresses, and that terminates when his/her own points are played out is provided to the user terminal. Then, points according to conditions a code train conforms with are given, as his/her own points, to the user who executes the game program, and the user who has been given his/her own points is authorized to execute or continue the game program.

With such a configuration, for the purpose of executing a game, or continuing a game program being executed, the user actively acts toward various media in order to obtain a code train.

Thus, compared with information unilaterally transmitted to a target of items, etc. to be provided, this could enhance the advertising effects. This could provide the following advantages: in particular, as users are assigned their own points that are different depending on a transmitted code train, their own points to be assigned may rise or fall depending on the transmitted code train, which could provide a new game wherein assignment of one's own points has a character as a game.

According to the fifth invention, as a program that, as points associated with a user vary, starts or continues execution depending on points, a game program such as a poker game that reduces points to be used as, for instance, a bet point, and that terminates when the points are played out is provided to the user terminal. The user of the user terminal who is provided the game obtains a code train to be issued as a keyword through a variety of media such as the Internet, various stores, magazines, and television broadcasting and radio broadcasting, and transmits the code train from the user terminal to code train receiving means.

Then, in the case of a program that, based on the received code train, extracts points from code train information managing means that associates a code train with points and records them, changes, for instance, reduces the points necessary for executing a game based on the extracted points, and terminates when the one's own points are gone, points associated with identification information recorded in point managing means are added to the one's own points.

Now, as the points to be added to the one's own points have been associated with a code train and recorded in the code train managing means, it is possible to easily change points to be assigned depending on a code train by modifying a correlation of the code train recorded in the code train information managing means and the points. Yet, this could provide the following advantage: as a result of often modifying the relationship between the code train and the points, the effect of protecting against any fraudulent act such as adding points based on an illegally obtained code train can be improved.

According to the sixth invention, any man-made work required to determine a code train can be alleviated by automatically generating a code train based on identification information. In addition, a code train can be issued to respective users identified by the identification information, provided that it is determined whether or not points can be extracted based on the identification information used in generation of the code train, by associating the generated code train with the points and recording them in the point managing means. This could provide advantages: a code train can be issued only to respective users who have registered in advance the identification information as a member, which enables a number of users to be held as a member by establishing a system that favors the members. Furthermore, the members could be given more favorable treatment by setting the points associated with the code train that is only available to the respective users higher than those associated with the code train that is available to everyone.

According to the seventh invention, by recording history of code trains used for changing points and determining predetermined conditions based on the recorded history, the system can authorize the code train whose usage was recorded as a history to execute a program or continue a program being executed, or prohibit it from executing a program or continuing a program being executed. This can prevent the user from changing his/her own points by transmitting a same code train many times.

According to the eighth invention, by determining predetermined conditions based on a valid period associated with a code train, a user's own points will not vary according to points to be obtained unless he/she can promptly obtain a code train and transmit the obtained code train quickly. Thus, this could provide advantages of encouraging the user to obtain a code train quickly and send it quickly, and enhancing a short-term ability to pull in more customers.

According to the ninth invention, by executing the process of granting to users whose points meet predetermined numerical conditions or exceed predetermined points privileges such as presentation of an item through exchange of points, etc., it is possible to motivate users to use a program. In addition, placed the limitation that the user should input attribute information such as an address, age, sex and hobby in the user terminal and transmit it in order to receive a privilege, users will actively register attributes. This could provide advantages of making it easier to keep track of and gather users' attributes, in contrast to an approach such as a questionnaire.

According to the tenth to the twelfth inventions, a code train to be used as a keyword is issued/outputted and also transmitted to the service server as data. Thus, one who has obtained the code train issued through various media such as the Internet, various stores, magazines and television broadcasting and radio broadcasting operates a user terminal and transmits the code train to a service server that uses a computer, the service server provides services such as provision of a game or downloading of music, etc, based on the received code train. Thus, to receive services, one who receives services actively acts toward various media in order to obtain a code train: in other words, he/she accesses to a Web page where advertisements containing a code train are displayed, uses a store, purchases a magazine, and watches television broadcasting or listens to radio broadcasting. Consequently, stores where users can obtain a code train, for instance, will be preferentially used, and close attention will be paid to advertisement that shows a code train of a magazine that the user purchases. Thus, this could provide advantages of not only enhancing the advertising effects compared with information unilaterally transmitted to individuals, but also enabling the user to implement a target program cheaply and to expand the profit with the sponsor, etc.

## Claims

1. A data communication control system comprising: recording means for recording a program or data; and data communication controlling means for causing a user terminal to execute the program recorded in said recording means through a communication line, or for downloading the recorded program or data to the user terminal, **characterized by** comprising:
code train issuing means for issuing a code train and also for transmitting said code train to said data communication controlling means;
code train receiving means for receiving the code train transmitted from said user terminal through the communication line;
code train judging means for judging whether or not said received code train conforms with predetermined condition corresponding to said issued code train; and
authorizing means for authorizing the user terminal that transmitted said code train to execute said program, continue the program being executed, download the program, or download data, when said received code train conforms with said predetermined condition.

2. A data communication control system comprising: recording means for recording a program or data; a first server capable of notifying a code train to a user terminal through a communication line; and data communication controlling means for allowing the program or data recorded in said recording means to be executed from the user terminal via the communication line, or for causing said user terminal to download the recorded program or data, **characterized by** comprising:
code train receiving means for receiving the code train transmitted from said user terminal through the communication line;
code train judging means for judging whether said received code train conforms with a predetermined condition; and
authorizing means for authorizing said user terminal that transmitted said code train to execute said program, continue the program being executed, download the program or download the data, when said received code train conforms with said predetermined condition.

3. A data communication control system comprising: recording means for recording a program or data; a first server capable of transmitting a code train to a user terminal through a communication line; and data communication controlling means for allowing said user terminal to execute the program or data recorded in said recording means, or for downloading the program from said recording means to said user terminal, **characterized by** comprising:
means for, by preliminarily downloading, causing said user terminal to execute a management program that causes said user terminal to receive and record the code train transmitted from said first server, and to transmit said recorded code train to a predetermined destination from said user terminal;
code train receiving means for receiving the code train transmitted from said user terminal via the communication line;
code train judging means for judging whether or not said received code train conforms with the predetermined condition; and
authorizing means for authorizing said user terminal that transmitted said code train to execute said program, continue the program being executed, download the program, or download the data, when said received code train conforms with said predetermined condition.

4. The data communication control system as set forth in any one of claims 1 through 3, wherein
said program is a program that starts or continues according to points associated with the user, and
the authorizing means for authorizing execution of said program or continuation of the program changes said points depending on said code train.

5. The data communication control system as set forth in claim 4, further comprising:
point managing means for associating identification information for identifying the user operating said user terminal or the user terminal with points of said user or user terminal identified by said identification information and records them;
code train information managing means for associating the code train with the points and records them; and
extracting means for extracting the points associated with the code train received from said user terminal, from said code train information managing means;
wherein the authorizing means for authorizing execution of said program, continuation of the program being executed, downloading of the program, or downloading of the data causes said point managing means to change the points associated with said identification information based on the points extracted by said extracting means.

6. The data communication control system as set forth in claim 5, further comprising code train generating means for generating a code train based on said identification information,
wherein said point managing means associates the identification information, the code train generated based on said identification information and the points.

7. The data communication control system as set forth in claim 5 or 6, wherein
said point managing means associates a history of the code train related to the change of the points with the identification information and records them, and
said predetermined condition is determined based on the history recorded in association with said identification information.

8. The data communication control system as set forth in any one of claims 5 through 7, wherein
said point managing means records data related to available period associated with the code train; and
said system further comprises condition determining means for determining said predetermined condition, based on the data related to the available period recorded in association with said code train.

9. The data communication control system as set forth in any one of claims 5 through 8, comprising: attribute information transmitting means for causing said user terminal to input attribute information indicative of attributes of the user identified by the identification information and to transmit the inputted attribute information, and
further comprising:
means for recording said attribute information in association with the identification information in said point managing means, when receiving from said user terminal the attribute information indicative of the attributes of the user identified by the identification information; and privilege granting means for granting a privilege to the user identified by the identification information recorded in association with the attribute information when the points recorded in association with said point managing means satisfy a predetermined numeric condition.

10. A communication system which is used for providing services, and comprises a service server capable of communicating with a user terminal through a communication line; and code train issuing means for issuing a code train and also transmitting said code train to said service server, **characterized by** comprising:
code train receiving means for receiving the code train transmitted from said user terminal through the communication line;
code train judging means for judging whether or not said received code train conforms with the predetermined condition corresponding to said issued code train; and
authorizing means for authorizing the user terminal that transmitted said code train to provide services or continue services being provided, when said received code train conforms with said predetermined condition.

11. A service providing method which comprises a service server used for providing services, and code train issuing means for issuing a code train and also for transmitting said code train to said service server, and provides services to a user terminal that communicates with said service server through a communication line, **characterized by** comprising the steps of:
issuing the code train and also transmitting said code train to said service server;
receiving the code train transmitted from said user terminal, through the communication line;
judging whether or not said received code train conform with the predetermined condition corresponding to said issued code train; and
authorizing the user terminal that transmitted said code train to provide services or continue the service being provided, when said received code train conforms with said predetermined condition.

12. A computer program that causes a computer comprising data communication controlling means for communicating with a user terminal through a communication line, to provide a program or data to said user terminal, **characterized by** causing the computer to execute the steps of:
causing the computer to receive a code train transmitted from code train issuing means;
judging whether or not said received code train conforms with predetermined condition corresponding to the code train transmitted from said code train issuing means when receiving the code train transmitted from said user terminal through the communication line; and
authorizing said user terminal to execute said program, continue the program being executed, download the program or download the data, when said received code train conforms with predetermined condition.
